# EUROPÄISCHE PATENTSCHRIFT

(11) **EP 0 690 795 B1**
(45) Veröffentlichungstag und Bekanntmachung des Hinweises auf die Patenterteilung: **04.06.1997**
(21) Anmeldenummer: 94913077.7
(22) Anmeldetag: 29.03.1994
(51) Int. Cl.: B60D 1/02

(54) **ANHÄNGERKUPPLUNG**
TRAILER HITCH
ATTELAGE DE REMORQUE

(30) Priorität: 30.03.1993 DE 4310263
(43) Veröffentlichungstag der Anmeldung: 10.01.1996
(73) Patentinhaber: ROCKINGER Spezialfabrik für Anhängerkupplungen GmbH & Co., D-80935 München (DE)
(72) Erfinder: DREXLER, Peter, D-83646 Bad Tölz (DE); SZCZEPANEK, Udo, D-82223 Eichenau (DE); OGRIS, Gottfried, D-85716 Unterschleissheim (DE)
(74) Vertreter: Weickmann, Heinrich, Dipl.-Ing.
(86) Internationale Anmeldenummer: EP9400986
(87) Internationale Veröffentlichungsnummer: WO9422683

(56) Entgegenhaltungen:
- EP-A- 0 149 453
- EP-A- 0 464 260
- AT-B- 393 655
- DE-A- 2 458 977

## Beschreibung

Die Erfindung betrifft eine Anhängerkupplung umfassend einen Kupplungskörper und einen relativ zu diesem Kupplungskörper zwischen einer Kupplungsstellung und einer Lösestellung beweglichen Kupplungsbolzen, eine an dem Kupplungskörper angebrachte Bolzenführung für den Kupplungsbolzen, eine auf dem Kupplungskörper angebrachte Stellmechanik zur Verstellung des Kupplungsbolzens zwischen der Kupplungsstellung und der Lösestellung, Sicherungsmittel zum Sichern des Kupplungsbolzens in der Kupplungsstellung und ein auf dem Kupplungskörper befestigtes Gehäuse, welches die Stellmechanik und die Sicherungsmittel wenigstens teilweise einschließt.

Aus der DE-C2-3 226 360 ist eine Anhängerkupplung bekannt, bei welcher die Sicherungsmittel durchwegs an dem Gehäuse abgestützt sind. Dies hat folgende Konsequenz: Auf den Kupplungsbolzen können von der Zugöse der Deichsel eines Nachlauffahrzeugs erhebliche Kräfte ausgeübt werden, die den Kupplungsbolzen aus der Kupplungsstellung in die Lösestellung zu bewegen suchen. Da es während der Fahrt natürlich nicht akzeptabel ist, daß der Kupplungsbolzen unter der Wirkung dieser Kräfte nach oben in die Lösestellung übergeht, müssen diese Kräfte von den Sicherungsmitteln aufgenommen werden. Wenn die Sicherungsmittel an dem Gehäuse abgestützt sind, so bedeutet dies weiter, daß das Gehäuse in sehr stabiler Form und aus hochwertigem Material gestaltet werden muß. Dies führt zu einer Verteuerung der Kupplung, auch deshalb, weil die Bearbeitung eines solchen Gehäuses für die Lagerung der einzelnen Teile der Stellmechanik dann ebenfalls entsprechend teuerer wird.

Fur eine weiterhin bekannte Ausführungsform einer automatischen Anhängerkupplung der Firma Ringfeder, Typ 56 S, gilt das zur DE-C2-3 226 360 Gesagte ebenfalls.

Der Erfindung liegt die Aufgabe zugrunde, bei einer Anhängerkupplung der eingangs bezeichneten gattungsgemäßen Art unter Beibehaltung einer zuverlässigen Sicherung des Kupplungsbolzens gegen Aufwärtsverschiebung aus der Kupplungsstellung in die Lösestellung eine Konstruktion anzugeben, die es erlaubt, wesentliche Komponenten, insbesondere das Gehäuse, einfacher und kostengünstiger ggf. auch aus einem Werkstoff geringerer Festigkeit und einfacherer Bearbeitbarkeit herzustellen.

Zur Lösung dieser Aufgabe wird vorgeschlagen, daß die Bolzenführung an einem von dem Gehäuse gesonderten Führungselement angebracht ist und daß die Sicherungsmittel wenigstens zum Teil zwischen dem Führungselement und dem Kupplungsbolzen wirksam sind. Diese Konstruktion unterscheidet sich auch von einer aus der DE-B1-0 149 453 bekannten Konstruktion, bei der ebenfalls keine klare Trennung zwischen einem Sicherungsmittel aufweisenden Führungselement und Gehäuse getroffen ist.

Bei der erfindungsgemäßen Konstruktion kann man die Führungsbuchse, welche ein verhältnismäßig einfaches und nur relativ geringer Bearbeitung bedürftiges Werkstück darstellt, aus einem hochfesten Werkstoff herstellen, so daß dieses die Stützkräfte für die Sicherungsmittel ohne weiteres aufnehmen und auf den Kupplungskörper übertragen kann. Dann ist das Gehäuse von diesen Stützkräften weitgehend oder vollständig entlastet und kann demgemäß aus einem anderen Material hergestellt werden, das für die komplizierte Formgebung und die vielseitige Bearbeitung zur Unterbringung der Stellmechanik besonders geeignet ist, z.B. kann man das Gehäuse aus wohlfeilerem Eisen- oder Stahlguß, ggf. sogar aus Leichtmetall oder Kunststoff, herstellen.

Die zwischen dem Führungselement und dem Kupplungsbolzen wirksamen Sicherungsmittel können z.B. ein Sicherungselement umfassen, welches an dem Führungselement zwischen einer Sicherungsstellung und einer Freigabestellung geführt ist. Dabei ist es möglich, daß das Sicherungselement von einem Sicherungsbolzen gebildet ist, welcher an dem Führungselement in einer Richtung quer zur Führungsrichtung des Kupplungsbolzens verschiebbar geführt ist.

Dieses wenigstens eine Sicherungselement kann durch ein Teil der Betätigungsmechanik gegen die Kraft einer Sicherungselementen-Vorspanneinrichtung aus der Sicherungsstellung in die Freigabestellung überführbar sein, und zwar vor oder in einer Anfangsphase der Bewegung des Kupplungsbolzens aus seiner Kupplungsstellung in seine Lösestellung. Als zur Einwirkung auf das Sicherungselement geeignetes Teil der Betätigungsmechanik kommt insbesondere ein Aufwerfhebel der Betätigungsmechanik in Frage, welcher zur Mitnahme des Kupplungsbolzens aus der Kupplungsstellung in die Lösestellung angeordnet und ausgebildet ist. Dieser Aufwerfhebel kann insbesondere so gestaltet und angeordnet sein, daß er in eine Ausnehmung des Kupplungsbolzens eingreift, welche von einem durch den Aufwerfhebel beaufschlagbaren Mitnahmeelement wenigstens teilweise übergriffen ist. Dann kann das Sicherungselement in diese Ausnehmung eingreifen und es können an dem Sicherungselement und dem Aufwerfhebel zusammenwirkende Nockenmittel vorgesehen sein, welche beim Übergang des Aufwerfhebels aus einer der Kupplungsstellung des Kupplungsbolzens entsprechenden Ruhestellung in eine dem Eingriff des Aufwerfhebels an dem Mitnahmeelement entsprechende Mitnahme-Einleitungsstellung in Wechselwirkung treten und das Sicherungselement wenigstens teilweise aus der Sicherungsstellung in die Freigabestellung überführen.

Es ist nun denkbar, daß der Aufwerfhebel in seiner Ruhestellung als ein zusätzliches Sicherungselement zur Sicherung des Kupplungsbolzens in seiner Kupplungsstellung wirksam ist.

Es soll nicht ausgeschlossen sein, daß auch der Aufwerfhebel an dem Führungselement gelagert ist. Wenn dann der Aufwerfhebel eine Sicherungsfunktion auf den Kupplungsbolzen ausübt, wie z.B. aus der DE-C2-3 226 360 bekannt, so werden bei Lagerung des Aufwerfhebels an dem Führungselement auch die Stützkräfte auf das Führungselement übertragen, die von dem Aufwerfhebel in seiner Funktion als Sicherungselement übernommen werden. Es kann allerdings konstruktive Schwierigkeiten bereiten, den Aufwerfhebel an dem Führungselement zu lagern, so daß man unter Umständen doch auf eine Lagerung des Aufwerfhebels an dem Gehäuse zurückgreifen wird. Wenn dann dem Aufwerfhebel eine Sicherungsfunktion trotzdem zugeordnet ist, so ist das Gehäuse noch nicht in optimaler Weise von Stützkräften der Sicherungsmittel entlastet und es müssen bei der Gestaltung des Gehäuses Kompromisse geschlossen werden zwischen der Forderung nach ausreichender Aufnahmefähigkeit für solche Stützkräfte und einer einfachen und kostengünstigen Gestaltung andererseits. Es sind aber auch in diesem Fall bereits Vorteile hinsichtlich einer kostengünstigeren Gestaltung des Gehäuses erzielbar, insbesondere dann, wenn man die Sicherungsfunktion des Aufwerfhebels erst dann wirksam werden läßt, nachdem eine andere, auf das Führungselement wirkende Sicherung bereits wirksam geworden ist. In diesem Fall wird dann primär die am Führungselement abgestützte Sicherung wirksam und erst im Notfall die Sicherung über den Aufwerfhebel. In diesem Fall ist dann jedenfalls mit einer weniger häufigen Belastung des Gehäuses durch Sicherungskräfte zu rechnen, was bei Konstruktion des Gehäuses vorteilhaft ausgenutzt werden kann.

Bedient man sich, wie vorstehend angedeutet, des Aufwerfhebels als eines Teils der Sicherung, so ist es denkbar, daß der Aufwerfhebel, wie an sich bekannt, in seiner Ruhestellung durch Selbstsperrung oder etwa durch Formschluß mit dem Kupplungsbolzen zusammenwirkt.

Wenn der Aufwerfhebel bei Übergang von seiner Ruhestellung in Richtung auf seine Mitnahmeeinleitungsstellung seine Sicherungsfunktion verliert, bevor das Sicherungselement seine Sicherungsstellung verläßt, so ist damit eine Voraussetzung dafür geschaffen, daß bei Aufwärtsbelastung des Kupplungsbolzens dieser primär von dem an dem Führungselement abgestützten Sicherungselement gestützt wird, also primär auch das Führungselement und nicht das Gehäuse belastet wird.

Es sei aber hier vermerkt, daß grundsätzlich keine Priorität hinsichtlich der zeitlichen Abstimmung des Wirksamwerdens einzelner Sicherungselemente besteht.

Das Führungselement kann als eine Führungshülse ausgebildet sein, in welcher der Kupplungsbolzen geführt ist. Dann wird es sich häufig als zweckmäßig erweisen, daß ein Aufwerfhebel der Stellmechanik durch einen Schlitz hindurch mit dem Kupplungsbolzen zusammenwirkt.

Die Sicherungsmittel können wenigstens zum Teil in einem Fußteil des Führungselements gelagert sein, welcher der Befestigung des Führungselements an dem Kupplungskörper dient. Dadurch wird die Kraftübertragung zwischen dem Führungselement und dem Kupplungskörper erleichtert und das Führungselement kann in seinen Bereichen außerhalb des Fußteils wiederum leichter und kostengünstiger ausgestaltet werden. Bei gabelförmiger Ausbildung des Kupplungskörpers mit einem oberen Gabelteil und einem unteren Gabelteil besteht die Möglichkeit, den Fußteil des Führungselements auf der Oberseite des oberen Gabelteils zu befestigen, etwa durch Schrauben.

Bei gabelförmiger Ausbildung des Kupplungskörpers mit einem oberen Gabelteil und einem unteren Gabelteil besteht weiter die Möglichkeit, das Führungselement mit einem integral angeformten Stützelement auszuführen, welches in der Betriebsstellung des Führungselements an der Unterseite des oberen Gabelteils abgestützt ist. Insbesondere kann man bei Ausgestaltung des Führungselements als Führungshülse an dieser ein ringförmiges Stützelement anbringen. Dies führt dann dazu, daß man die Führungshülse, oder generell gesagt das Führungselement, bei der Montage zwischen die beiden Gabelteile einführt und von unten durch eine Öffnung des oberen Gabelteils in Betriebsstellung bringt. Dies setzt voraus, daß die Länge des Führungselements und der Abstand der Gabelteile derart aufeinander abgestimmt werden, daß diese Art der Einführung möglich ist. Ist das Führungselement einmal in seine Betriebsstellung an dem oberen Gabelteil gebracht worden, so kann es grundsätzlich durch Reibsitz in der es aufnehmenden Öffnung des oberen Gabelteils festgelegt werden, es kann aber auch durch nach der Einführung angebrachte Haltemittel gegen Abwärtsbewegung gesichert werden.

Bei Anhängerkupplungen ist häufig gefordert, daß die Sicherungsmittel zwei Sicherungselemente umfassen, welche im wesentlichen voneinander unabhängig wirken, so daß bei Beschädigung oder Funktionsuntüchtigkeit eines der Sicherungselemente das andere voll wirksam ist. Dies ist auch der Grund dafür, daß weiter oben neben einem an dem Führungselement abgestützten Sicherungselement zusätzlich die Möglichkeit der Sicherungsfunktion eines Aufwerfhebels in Betracht gezogen worden ist. Will man nun von der Sicherungsfunktion durch den Aufwerfhebel wegkommen, um das etwa zur Lagerung des Aufwerfhebels herangezogene Gehäuse von Stützkräften durch den als Sicherungselement eingesetzten Aufwerfhebel zu entlasten, so ist es auch denkbar, daß die Forderung nach zwei unabhängigen Sicherungselementen erfüllt werden kann, indem die zwei Sicherungselemente an dem Führungselement geführt sind. Auf diese Weise läßt sich das Gehäuse von den durch die Sicherungselemente etwa zu erbringenden Stützkräften vollständig entlasten.

Die Anordnung zweier Sicherungselemente an ein und demselben Führungselement kann etwa in der Weise erfolgen, daß die beiden Sicherungselemente einander in einer Richtung gegenüberstehen, welche im wesentlichen orthogonal zu einer durch die Längsachse des Kupplungskörpers und durch die Führungsrichtung des Kupplungsbolzens definierten Längsmittelebene des Kupplungskörpers steht.

Die beiden an dem Führungselement abzustützenden Sicherungselemente können beispielsweise von je einem Sicherungsbolzen gebildet sein, welcher an dem Führungselement verschiebbar geführt ist.

Diese beiden Sicherungselemente können nach wie vor durch den Aufwerfhebel gesteuert werden, etwa so, daß die beiden Sicherungselemente durch Nockenmittel aus der jeweiligen Sicherungsstellung in eine Freigabestellung übergeführt werden, und zwar Nockenmittel, welche einerseits an dem Aufwerfhebel und andererseits an den beiden Sicherungselementen angebracht sind.

In diesem Falle braucht der Aufwerfhebel keinerlei Sicherungsfunktion mehr zu erfüllen, da ja die Forderung nach redundanter Sicherheit bereits durch die zwei Sicherungselemente erfüllt ist. Dann kann der Aufwerfhebel bedenkenlos an dem Gehäuse gelagert sein, weil er von einer auf unmittelbarem Zusammenwirken mit dem Kupplungsbolzen beruhenden Sicherungsfunktion freigestellt ist. Dann kann das Gehäuse insgesamt leicht und aus leicht zu bearbeitendem Werkstoff hergestellt werden.

Wie an sich beispielsweise aus der Figur 18 der EP-B1-0 149 453 bekannt, können die Sicherungsmittel mit mindestens einem Sicherungselement ausgeführt sein, welches mit einem an der Außenseite der Anhängerkupplung erkennbaren Anzeigeelement zur gemeinsamen Bewegung verbunden ist. Ein solches Anzeigeelement erleichtert dem Benutzer der Anhängerkupplung die Überprüfung, ob die Sicherung wirksam und damit die Anhängerkupplung in ordnungsgemäßem Betriebszustand ist. Denkbar ist es auch, bei Vorhandensein von zwei geeigneten Sicherungselementen jedes dieser Sicherungselemente mit einem Anzeigeelement zu verbinden, so daß die Anzeige des ordnungsgemäßen Kupplungszustands für den Benutzer noch leichter abzulesen ist, gleichgültig, von welcher Seite her er die Anhängerkupplung betrachtet. Wenn hier von Anzeigeelementen die Rede ist, so soll dieser Begriff in weitem Sinne verstanden werden. Es ist nicht unbedingt erforderlich, daß diese Anzeigeelemente am Orte der Kupplung überprüft werden. Es ist auch denkbar, daß die Anzeigeelemente lediglich Übertragungsteile in einer Übertragungskette sind, die zu einem Beobachtungsort, beispielsweise im Fahrerhaus eines Lastkraftwagens, führt. Eine einfache Möglichkeit liegt aber darin, daß das Anzeigeelement von dem Ende eines Sicherungsbolzens gebildet ist, welcher in dem Führungselement geführt ist.

Es ist grundsätzlich auch möglich, daß die Sicherungsmittel mindestens ein kupplungsbolzenseitiges Sicherungselement umfassen, welches an dem Kupplungsbolzen beweglich gelagert ist und mit einem Widerlager an dem Führungselement zusammenwirkt. Dieser, soweit bekannt, für sich neue und originelle Gedanke ist grundsätzlich auch unabhängig davon anwendbar, wie der Kupplungsbolzen geführt ist. Insbesondere ist für die Anwendung dieses Gedankens nicht notwendig, daß die Bolzenführung an einem von dem Gehäuse gesonderten Führungselement angebracht ist. Es wäre vielmehr für die Anwendung dieses Gedankens auch möglich, daß der Kupplungsbolzen in einer mit dem Gehäuse integral hergestellten Führung geführt ist.

Der Gedanke, ein Sicherungselement an dem Kupplungsbolzen beweglich zu lagern, kann etwa in der Weise weitergebildet werden, daß bei Ausbildung des Führungselements als Führungshülse und Führung des Kupplungsbolzens in einem Führungskanal dieser Führungshülse das kupplungsbolzenseitige Sicherungselement gegen die Wirkung von Vorspannmitteln durch ein Teil der Stellmechanik in eine Sicherungsposition vorgespannt ist und durch die Vorspannmittel in eine Freigabestellung überführbar ist, in welcher es mit dem Widerlager der Führungshülse nicht zusammenwirkt; die Sicherungsstellung tritt dabei dann auf, wenn der Kupplungsbolzen einer Kupplungsstellung und die Stellmechanik einer der Kupplungsstellung des Kupplungsbolzens entsprechenden Ruhelage angenähert werden.

Das kupplungsbolzenseitige Sicherungselement kann beispielsweise von einem innerhalb des Kupplungsbolzens verschiebbar geführten Sicherungsbolzen gebildet sein, wobei in erster Linie daran gedacht wird, diesen Sicherungsbolzen im wesentlichen radial zu einer Achse des Kupplungsbolzens in dem Kupplungsbolzen aufzunehmen und zu führen. Dann kann das Widerlager von einem Durchgang der Führungshülse gebildet sein.

Zur Steuerung des kupplungsbolzenseitigen Sicherungselements kann wiederum der Aufwerfhebel verwendet werden, welcher der Überführung des Kupplungsbolzens aus seiner Kupplungsstellung in seine Lösestellung dient.

Wenn erfindungsgemäß der Kupplungsbolzen in einem von dem Gehäuse gesonderten Führungselement geführt wird, so ist es gleichwohl bedeutsam, die Führung des Kupplungsbolzens und alle ihr zugeordneten Teile, also insbesondere Sicherungsmittel, vor Verschmutzung und äußerer mechanischer Einwirkung zu schützen. Deshalb wird weiter empfohlen, daß das Führungselement innerhalb des Gehäuses im wesentlichen eingeschlossen ist. Dabei können nun das Gehäuse einerseits und das Führungselement andererseits durch gesonderte Befestigungsmittel an dem Kupplungskörper befestigt werden. Es wird empfohlen, diese Befestigungsmittel so zu gestalten, daß Führungselement und Gehäuse nacheinander angebracht werden können und zwar insbesondere so, daß man in einem ersten Montageschritt das Führungselement an dem Kupplungskörper anbaut und in einem zweiten Montageschritt das Gehäuse an dem Kupplungskörper anbaut.

Weiter oben war bereits erwähnt worden, daß man einen Sicherungsbolzen mit einem Anzeigeelement kuppeln kann. Grundsätzlich gilt, daß jedes Sicherungselement, wie auch immer seine Form und Anordnung ist, mit einem Anzeigeelement zur gemeinsamen Bewegung verbunden werden kann, welches durch das Gehäuse hindurch zu einer Beobachtungsstelle geführt ist. Dies gilt sowohl für eine Anzeige, die unmittelbar am Ort der Anhängerkupplung überwacht wird, gilt aber auch für eine Anzeige, die im Führerhaus dem Fahrer zur Verfügung steht. Die Durchführung eines Anzeigemittels durch das Gehäuse kann dabei so gestaltet werden, daß an der Durchführungsstelle keine wesentlichen Kräfte auf das Gehäuse ausgeübt werden, obwohl das Anzeigemittel bzw. das zum Anzeigemittel führende Übertragungsmittel mit dem Sicherungselement zur gemeinsamen Bewegung verbunden ist.

Wenn ein an dem Führungselement beweglich gelagertes Sicherungselement durch Vorspannmittel in eine Sicherungsstellung vorgespannt ist, so besteht grundsätzlich die Möglichkeit, die Vorspannmittel, die etwa benötigt werden, um das Sicherungselement in seine Sicherungsstellung vorzuspannen, ebenfalls an dem Führungselement abzustützen. Diese Möglichkeit soll vom Schutz grundsätzlich nicht ausgeschlossen sein. Es kann aber vorteilhaft sein, diese Vorspannmittel an dem Gehäuse abzustützen und ggf. innerhalb des Gehäuses unterzubringen. Es ist ohne weiteres einzusehen, daß man die Vorspannmittel und ggf. auch zusätzliche Führungsmittel so ausgestalten kann, daß sie keine wesentlichen vom Kupplungsbolzen herrührenden Belastungen auf das Gehäuse übertragen. Man erreicht dann den weiteren Vorteil, daß das Führungselement, befreit von der Stützfunktion für die Vorspannmittel, besonders einfach ausgestaltet werden kann und dennoch alle wesentlichen Kräfte aufnimmt. Andererseits kann das Gehäuse aus einem Material gefertigt werden, für das mechanische Festigkeit von sekundärer Bedeutung ist, so daß an diesem Material dann leicht auch die Stützstelle für die Vorspannmittel angeformt werden kann.

Denkbar ist ein um eine Schwenkachse parallel oder zusammenfallend mit einer Führungsachse des Kupplungsbolzens schwenkbares Kupplungsmaul mit Sperrmitteln zum Sperren des Kupplungsmauls gegen Drehung um die Schwenkachse, wobei diese Sperrmittel das Kupplungsmaul in einer mittleren Stellung dann sperren, wenn sich der Kupplungsbolzen in Lösestellung befindet und einkupplungsbereit ist, und dann entsperren, wenn sich der Kupplungsbolzen in Kupplungsstellung befindet. Eine solche Anhängerkupplung ist beispielsweise in Form der oben bereits erwähnten Anhängerkupplung Typ 56 S der Firma Ringfeder bekannt. Die Sperrmittel werden dabei durch die Stellmechanik mittelbar oder unmittelbar zwischen einer Sperrstellung, in welcher sie das Kupplungsmaul sperren und einer Entsperrungsstellung, in welcher sie das Kupplungsmaul entsperren, verstellt. Zweck dieser Sperrmittel ist kurz gesagt folgender: Wenn eine Deichsel mit Zugöse angekuppelt wird, so kann das Ankuppeln erleichtert werden, wenn das Kupplungsmaul starr an dem Kupplungskörper festgelegt ist, weil dann die Seitenwände des Kupplungsmauls zu einer zwangsläufigen Einführung der Zugöse in die richtige Position innerhalb der Kupplung führen, in welcher der Kupplungsbolzen durch die Zugöse hindurchtreten kann. Andererseits soll im Fahrbetrieb - gedacht ist hier insbesondere an das Befahren enger Kurven, beispielsweise im Rangier- oder Baustellenbetrieb - ein etwa auftretender Stoß der Deichsel gegen eine Seitenwand des Kupplungsmauls nicht zu einer Zerstörung des Kupplungsmauls führen. Deshalb ist es erwünscht, das Kupplungsmaul im Betrieb gegen eine Rückstellfeder schwenkbar zu halten, so daß es einer etwaigen Berührung mit der Deichsel ausweichen kann. Wenn beim Einfahren der Zugöse in das Kupplungsmaul die Zugöse oder ein anschließender Deichselbereich gegen eine Seitenwand des Kupplungsmauls stößt, so können nicht unerhebliche Kräfte auf das Kupplungsmaul übertragen werden. Diese Kräfte müssen dann drehmomentmäßig durch die Sperrmittel aufgenommen werden. Bei der bekannten Lösung nach der Ringfeder-Kupplung, Typ 56 S, sind nun die Sperrmittel derart angeordnet und ausgebildet, daß ein auf das Kupplungsmaul etwa einwirkendes Drehmoment von einer Sperr-Rast des Kupplungsmauls über einen Sperrbolzen auf eine Sperrbolzenführung übertragen werden und diese Sperrbolzenführung befindet sich im Gehäuse. Dies bedeutet, daß das Gehäuse durch die Sperrmittel erheblichen Kräften unterworfen werden kann, was zu einer stabilen und deshalb kostspieligen Ausgestaltung des Gehäuses führt. Demgegenüber ist es in Weiter bildung der Erfindung möglich, daß die Sperrmittel derart zwischen dem Kupplungskörper und dem Kupplungsmaul angeordnet und ausgebildet sind, daß bei einer drehmomentmäßigen Belastung des Kupplungsmauls keine wesentlichen Kräfte auf die Betätigungsmittel und das Gehäuse übertragen werden. Dies gelingt insbesondere dadurch, daß die Sperrmittel ein in dem Kupplungskörper geführtes Sperrglied umfassen, welches mit einer Sperrgliedaufnahme des Kupplungsmauls in Sperreingriff tritt. Selbst wenn dann das Sperrglied in Wirkverbindung mit den Betätigungsmitteln steht, um es zwischen Sperrstellung und Entsperrungsstellung hin und her bewegen zu können, so können die Verbindungsmittel derart lose, elastisch oder spielbehaftet geführt sein, daß sie keine wesentlichen Kräfte auf das Gehäuse übertragen.

Es ist weiterhin möglich, daß die Sperrmittel ein in einer kupplungskörperfesten Sperrgliedführung geführtes Sperrglied und eine Sperr-Rast an dem Kupplungsmaul umfassen, daß zwischen einem Teil der Stellmechanik und dem Sperrglied eine Kurven-Kurvenfolger-Verbindung besteht, um das Sperrglied zwischen einer Entsperrungsstellung und einer Sperrstellung gegenüber der Sperr-Rast zu verstellen in Abhängigkeit von der Stellung des Kupplungsbolzens und daß die Kurven-Kurvenfolger-Verbindung derart ausgebildet ist, daß bei Außerfluchtstellung zwischen dem Sperrglied und der Sperr-Rast eine elastische Deformation in der Kurven-Kurvenfolger-Verbindung eintritt, wenn sich das Sperrglied an seine Sperrstellung nähert.

Mit dieser Gestaltung wird folgendes bezweckt: Es kann vorkommen, daß die Zugöse von der Anhängerkupplung abgekuppelt werden muß, wenn eine die Zugöse tragende Deichsel eines Nachlauffahrzeugs das Kupplungsmaul in einer gegenüber seiner Mittelstellung abgelenkten Stellung hält. Dann steht das Sperrglied nicht in Flucht mit der Sperr-Rast, d.h. das Sperrglied kann nicht in die Sperr-Rast einfahren, wenn der Kupplungsbolzen zum Zwecke der Abkupplung der Zugöse aus seiner Kupplungsstellung in seine Lösestellung übergeführt wird und demgemäß das Sperrglied in seine Sperrstellung treten will. Die eine elastische Deformation gestattende Kurven-Kurvenfolger-Verbindung erlaubt es nun trotz einer solchen Außerfluchtstellung zwischen Sperrglied und Sperr-Rast den Kupplungsbolzen in seine Lösestellung zu bringen.

Die Kurven-Kurvenfolger-Verbindung kann etwa mit einem Kurvenfolger ausgeführt werden, welcher an dem Sperrglied elastisch abgestützt ist, etwa in der Weise, daß der Kurvenfolger durch eine Schraubenkompressionsfeder gestützt ist, welche in einer Bohrung des Sperrglieds aufgenommen ist. Um trotz der elastischen Deformationsmöglichkeit gleichwohl eine zuverlässige Bewegung des Sperrglieds in beiden Richtungen zu erreichen, ist vorgesehen, daß die Kurven-Kurvenfolger-Verbindung ein Doppelkurvensystem an dem jeweiligen Teil des Betätigungssystems umfaßt, wobei eine erste Kurve des Doppelkurvensystems mit einem ersten am Sperrglied elastisch abgestützten Kurvenfolger und eine zweite Kurve des Doppelkurvensystems mit einem am Sperrglied starr angebrachten zweiten Kurvenfolger zusammenwirken und wobei dieser zweite Kurvenfolger von der zweiten Kurve abheben kann, wenn das Sperrglied infolge Außerfluchtstellung zu der Sperr-Rast nicht in seine Sperrstellung übergehen kann, das Doppelkurvensystem aber zufolge einer Bewegung der Stellmechanik dennoch eine Relativbewegung gegenüber dem Sperrglied ausführt. Wenn das Sperrglied wegen Abweichung des Kupplungsmauls von seiner Mittelstellung nicht in die Sperr-Rast findet, so tritt eine verstärkte Kompression der Schraubenkompressionsfeder ein, die bewirkt, daß nach Erreichen der Fluchtstellung zwischen Sperrglied und Sperr-Rast das Sperrglied unter vergrößerter Vorspannkraft in die Sperr-Rast einfällt. Es ist auch denkbar, daß die eine Kurve nach vollständigem Eindrücken des zugehörigen Kurvenfolgers in die Bohrung des Sperrglieds formschlüssig in Eingriff mit dem Sperrglied tritt.

Die Stellmechanik kann einen mit einem Mitnahmeelement des Kupplungsbolzens und ggf. mit den Sicherungsmitteln zusammenwirkenden Aufwerfhebel umfassen.

Bei dem Aufwerfhebel handelt es sich um ein Teil, das eine Mehrzahl von diffizilen Funktionen zu erfüllen hat und zur Erfüllung dieser Funktionen relativ kompliziert gestaltet werden muß. Die Herstellung dieses Teils mit der für die Funktionserfüllung erforderlichen Genauigkeit durch herkömmliche Herstellungsmethoden, z.B. Schmieden, ist relativ arbeits- und kostenaufwendig.

Es wird deshalb vorgeschlagen, daß der Aufwerfhebel aus einer Mehrzahl von mindestens zwei Teilhebeln zusammengesetzt ist. Bevorzugt werden die Teilhebel mit planen Seitenflächen sandwich-artig aneinander angelegt und durch Verbindungsmittel zu dem Aufwerfhebel verbunden. Die unterschiedlichen Funktionsteile des Aufwerfhebels können dann an den verschiedenen Teilhebeln einzeln angebracht werden. Bevorzugt werden die Teilhebel aus Flachmaterial ausgeschnitten, z.B. in herkömmlicher Stanz- oder Feinstanztechnik ausgestanzt. Sie können auch unter Anwendung von Laserstrahlschneidtechnik, Wasserstrahlschneidtechnik oder Elektronenstrahlschneidtechnik aus dem Metallblech gewonnen werden. Bevorzugt werden dabei solche Schneidmethoden, bei denen eine gesteuerte Erwärmung der Schnittkanten möglich ist. Dies gilt insbesondere für die Laserstrahlschneidtechnologie. Bei entsprechender Wahl des Werkstoffs und gezielter Energiezufuhr an den Funktionsstellen kann dann dort eine Härtung erzielt werden. Es empfiehlt sich, die Funktionsstellen an den einzelnen Teilhebelplatinen und die zugehörigen Eingriffsstellen an den jeweils gesteuerten Teilen so aufeinander abzustimmen, daß etwa notwendige Schrägflächen zum nockenartigen Zusammenwirken an den gesteuerten Teilen ausgebildet werden. Die Platinen können dann - welche Schneidtechnik auch immer angewandt wird - mit Schneidkanten hergestellt werden, welche im wesentlichen senkrecht zur Platinenebene stehen. Die Teilhebel können auch als Sinterteile hergestellt werden. Auch dabei ergibt sich eine vereinfachte Herstellungsweise. Die Teilhebel können aneinander befestigt sein, z.B. durch Schweißen, Kleben, Nieten oder dergleichen. In den Teilhebeln können Mehrkantöffnungen vorgesehen sein, welche nach Zusammensetzen der Teilhebel miteinander fluchten und auf einer Betätigungswelle mit Mehrkantprofil unverdrehbar gelagert werden können.

Bei verschiedenen Ausführungsformen von Anhängerkupplungen bedarf der Kupplungsbolzen in seiner oberen Totpunktlage, welche der Lösestellung entspricht, einer nach unten wirkenden Federkraft, um ihn in der Lösestellung zu arretieren, etwa dadurch, daß ein Mitnahmebolzen des Kupplungsbolzens in Eingriff mit einer Rastausnehmung eines Aufwerfhebels gehalten wird.

Die wesentlichen Gedanken dieser Erfindung sind bei Anhängerkupplungen anwendbar, bei denen das Einfallen des Kupplungsbolzens in die Zugöse beim Ankupplungsvorgang dadurch ausgelost wird, daß die einfahrende Zugöse den Kupplungsbolzen geringfügig anhebt und damit die Haltemittel löst, die ihn bis dahin in der Lösestellung gehalten haben. Die Erfindung ist darüber hinaus aber auch anwendbar bei Kupplungen, bei denen im Kupplungskörper eine Lösehebel angebracht ist, welcher mit der Stellmechanik zusammenwirkt und welcher beim Einfahren einer Kupplungsöse in die Anhängerkupplung durch das Vorlaufende der Kupplungsöse beaufschlagbar ist, so daß er durch seine dabei eingeleitete Bewegung Haltemittel, welche den Kupplungsbolzen bis dahin in der Lösestellung gehalten haben, unwirksam macht. Diese letztere Ausführungsform von Anhängerkupplungen ist beispielsweise in der europäischen Patentschrift EP-B1-0 149 453 und der entsprechenden US-Patentsachrift 4 579 365 beschrieben.

Die beiliegenden Figuren stellen Ausführungsbeispiele einer erfindungsgemäßen Anhängerkupplung dar. Es zeigen:
- Figur 1: einen Längsschnitt durch eine erste Ausführungsform einer erfindungsgemäßen Anhängerkupplung;
- Figur 2: einen Schnitt nach Linie II-II der Fig. 1;
- Figur 3: einen Längsschnitt entsprechend Fig. 1 nach einer ersten abgewandelten Ausführunsform in der Kupplungsstellung des Kupplungsbolzens;
- Figur 4: eine Ansicht der Anhängerkupplung gemäß Fig. 3 bei in Lösestellung befindlichem Kupplungsbolzen;
- Figur 5: eine Explosionsdarstellung der Anhängerkupplung gemäß Fig. 4 im Stadium der Zusammenfügung des Gehäuses mit dem Kupplungskörper;
- Figur 6: einen Schnitt entsprechend der Schnittlinie II-II der Ausführungsform nach Fig. 1 bei einer zweiten abgewandelten Ausführungsform;
- Figur 7: einen Schnitt entsprechend Linie VII-VII der Fig. 1 bei einer dritten abgewandelten Ausführungsform;
- Figur 8: einen Schnitt parallel zum Schnitt nach Fig. 7 entsprechend der Schnittlinie VIII-VIII der Fig. 3;
- Figur 9: eine Vergrößerung der Fig. 3 im Bereich eines unteren Gabelteils des Kupplungskörpers;
- Figuren 10, 11, 12 und 13: verschiedene Kupplungszustände bei einer vierten Ausführungsform einer erfindungsgemäßen Anhängerkupplung welche im Prinzip derjenigen der Figuren 1 und 2 entspricht,
- Figur 14: eine perspektivische Darstellung des kupplungsbolzennahen Teils des Aufwerfhebels bei der Ausführungsform nach den Figuren 10 bis 13 und
- Figur 15: eine Explosionsdarstellung zu dem gesamten Aufwerfhebel bei der Ausführungsform nach den Figuren 10 bis 14.

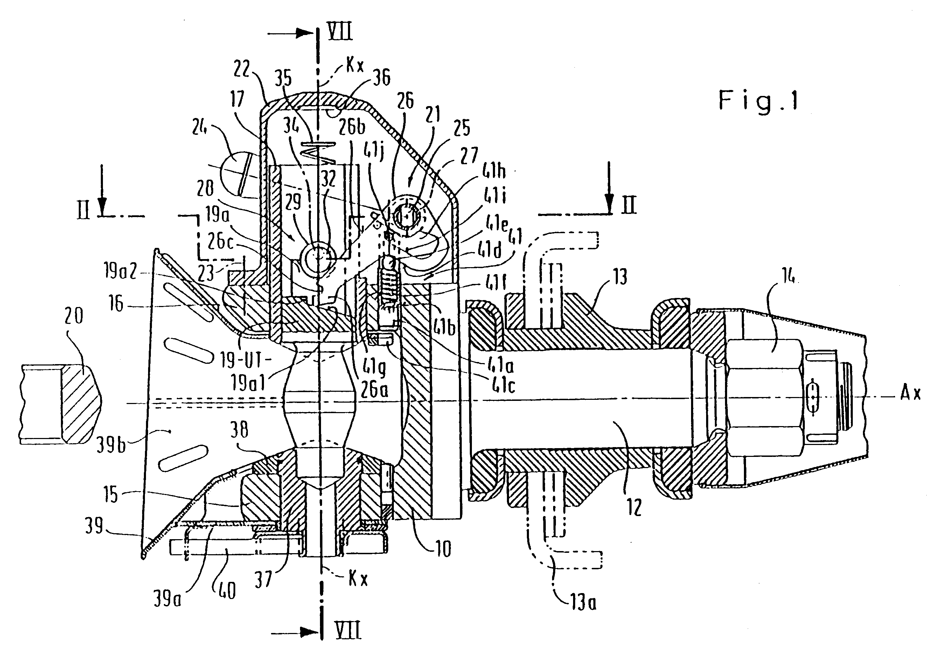

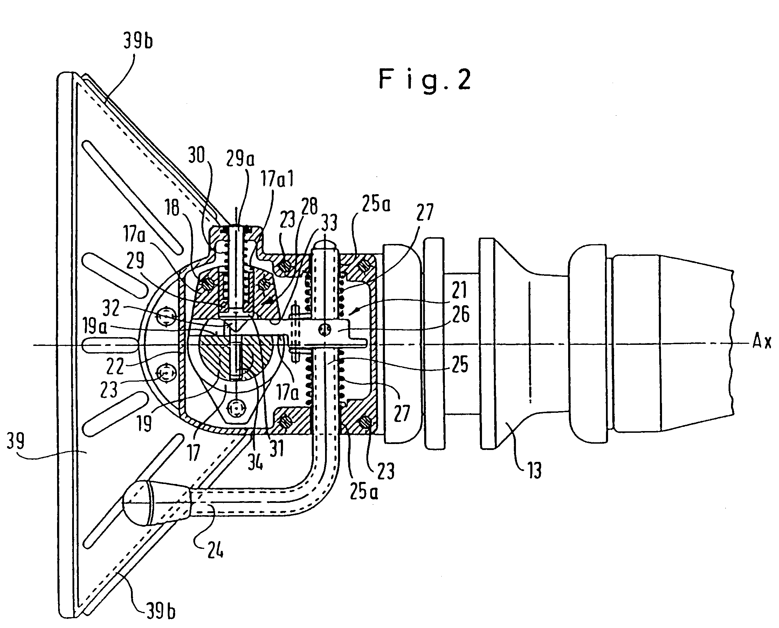

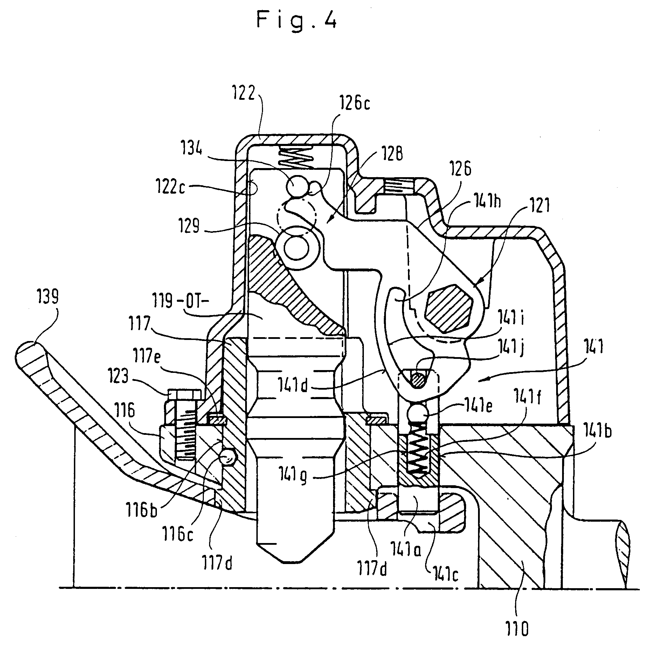

In den Fig. 1 und 2 ist ein Kupplungskörper ganz allgemein mit 10 bezeichnet. Dieser Kupplungskörper 10 umfaßt eine Zugstange 12, welche in einem Zugstangenlager 13 verschiebbar aufgenommen und durch eine Mutter 14 an dem Zugstangenlager 13 in Richtung der Achse Ax abgestützt ist. Der Kupplungskörper 10 umfaßt einen unteren Gabelteil 15 und einen oberen Gabelteil 16. Auf dem oberen Gabelteil 16 ist eine Führungsbuchse 17 angebracht und zwar ist diese Führungsbuchse 17, wie aus Fig. 2 ersichtlich, mit einem Fußteil 17a einstückig verbunden, welcher mittels Schrauben 18 auf dem oberen Gabelteil 16 befestigt ist. In der Führungsbuchse 17 ist ein Kupplungsbolzen 19 höhenverstellbar aufgenommen. In Fig. 1 erkennt man den Kupplungsbolzen 19 in seiner unteren Totpunktlage UT, welche auch als die Kupplungsstellung bezeichnet wird. Der Kupplungsbolzen 19 kann in der Totpunktlage UT eine Zugöse 20 durchgreifen und damit die Verbindung der Anhängerkupplung eines Zugfahrzeugs mit der Deichsel eines Nachlauffahrzeugs herstellen, an welcher die Zugöse 20 angebracht ist. Ein Blick auf die einer anderen Ausführungsform zugehörige Fig. 4 zeigt den Kupplungsbolzen in seiner oberen Totpunktlage OT, in welcher die Zugöse 20 in den Kupplungskörper einfahren bzw. aus diesem ausfahren kann.

Auf dem oberen Gabelteil 16 ist ferner eine Stellmechanik 21 angebracht. Diese Stellmechanik ist innerhalb eines Gehäuses 22 teilweise untergebracht, welches auch die Führungsbuchse 17 miteinschließt. Das Gehäuse 22 ist, wie aus Fig. 2 zu ersehen durch Befestigungsschrauben 23 befestigt; festzuhalten ist, daß die Führungsbuchse 17 als ein gegenüber dem Gehäuse 22 gesondertes Teil ausgebildet ist.

Die Betätigungsmechanik 21 umfaßt einen Handbetätigungshebel 24 der mit einer Betätigungswelle 25 einstückig verbunden und bei 25a in dem Gehäuse 22 gelagert ist. Auf der Betätigungswelle 25 ist drehfest der Aufwerfhebel 26 befestigt. Der Aufwerfhebel 26 ist zusammen mit der Betätigungswelle 25 durch Torsionsschraubenfedern 27 in eine Ruhestellung gemäß Fig. 1 vorgespannt, welche der unteren Totpunktlage UT des Kupplungsbolzens 19 entspricht. Durch den Handbetätigungshebel 24 kann der Aufwerfhebel 26 in eine Stellung verbracht werden, welche in Fig. 4 dargestellt ist und welche der oberen Totpunktlage des Kupplungsbolzens entspricht.

Der Aufwerfhebel 26 durchgreift einen Schlitz 17a der Führungsbuchse 17 und greift weiterhin in einen Schlitz 19a des Kupplungsbolzens 19 ein. In der unteren Totpunktlage UT ist der Kupplungsbolzen durch Sicherungsmittel gegen Hochgehen gesichert; dies muß sein, da es nicht akzeptabel wäre, wenn der Kupplungsbolzen etwa im Fahrbetrieb unbeabsichtigt hochgehen würde, was zu einem Abkuppeln des Nachlauffahrzeugs vom Zugfahrzeug führen würde. An dieser Stelle ist noch nachzutragen, daß das Zugstangenlager 13 an seiner Traverse 13a des Zugfahrzeugs befestigt ist.

Die Sicherungsmittel zum Sichern des Kupplungsbolzens 19 in seiner unteren Totpunktlage UT sind ganz allgemein mit 28 bezeichnet. Diese Sicherungsmittel umfassen zwei unabhängige Sicherungselemente. Ein erstes Sicherungselement ist von dem Aufwerfhebel 26 gebildet, dessen unteres Ende 26a gemäß Fig. 1 auf einer Schlitzbodenfläche 19a1 des Kupplungsbolzens 19a aufliegt unter der Federwirkung der Torsionsfedern 27. Dabei tritt zwischen dem unteren Ende 26a des Aufwerfhebels 26 und dem Schlitzboden 19a1 Selbstsperrung ein. Überdies würde bei unbeabsichtigter Überwindung dieser Selbstsperrung und demzufolge eintretendem Verschwenken des Aufwerfhebels 26 in Uhrzeigersinn dessen unteres Ende gegen eine Stufe 19a2 des Schlitzes 19a anschlagen, so daß spätestens bei Eintritt dieses Anschlags ein weiteres Aufwärtsgehen des Kupplungsbolzen 19 gesperrt ist.

Eine zusätzliche Sicherung im Rahmen der Sicherungsmittel 28 ist von einem Sicherungsbolzen 29 gebildet. Dieser Sicherungsbolzen 29 ist in einer Führungsbohrung 17a1 des Fußteils 17a der Führungsbuchse 18 verschiebbar geführt. Der Sicherungsbolzen 29 ist durch eine Schraubendruckfeder 30 in eine Sicherungsstellung vorgespannt, in welcher der Sicherungsbolzen mit einer zylindrischen Fase 31 eine zur Kupplungsbolzenachse im wesentlichen orthogonale Anschlagfläche des Kupplungsbolzens 19 übergreift. Der Sicherungsbolzen weist weiterhin eine konische Nockenfläche 32 auf, welche mit einer Kante 33 des Aufwerfhebels 26 nockenartig zusammenwirkt.

Wenn der Kupplungsbolzen 19 von seiner unteren Totpunktlage UT in die obere Totpunktlage (siehe Fig. 4) übergeführt werden soll, so werden der Handbetätigungshebel 24 und damit die Betätigungswelle 25 in Fig. 1 im Uhrzeigersinn verschwenkt. Dabei wird einerseits die Sperrwirkung zwischen dem unteren Ende 26a des Aufwerfhebels 26 und dem Schlitzboden 19a1 sowie der Stufe 19a2 aufgehoben, indem das untere Ende 26a an der Stufe 19a2 vorbeischwenkt. Andererseits greift die Kante 33 des Aufwerfhebels 26 an der konischen Nockenfläche 32 des Sicherungsbolzens 29 ein und schiebt den Sicherungsbolzen 29 in der Führungsbohrung 17a1 aus dem gegenseitigen Eingriff zurück so lange bis die konische Nockenfläche 32 in den Bereich der zylindrischen Außenumfangskontur des Kupplungsbolzen 19 gelangt. Die weitere Auswärtsbewegung des Sicherungsbolzens 29 kann dann je nach Abstimmung der konischen Nockenfläche 32 und der Kante 33 entweder von der Kante 33 oder von der Außenumfangskontur des nach oben gehenden Kupplungsbolzens 19 übernommen werden (auf dieses nach Obengehen des Kupplungsbolzens 19 wird noch einzugehen sein). Gegen Ende des Ausschiebens des Sicherungsbolzens 29 wird dieses Ausschieben in der Regel von der zylindrischen Umfangskontur des Kupplungsbolzens 19 übernommen. An dem Kupplungsbolzen 19 kann ebenfalls eine abgeschrägte Fase zum Zusammenwirken mit der konischen Nockenfläche 32 des Sicherungsbolzens angebracht sein.

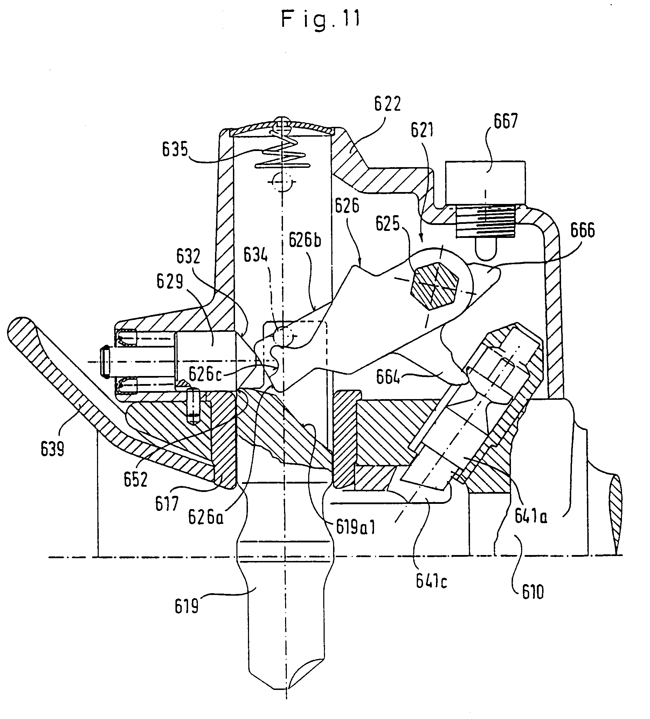

Wenn die Betätigungswelle 25 dann weiterhin im Uhrzeigersinn verschwenkt wird, so gelangt der Aufwerfhebel 26 mit einer Aufwerfkante 26b in Eingriff mit einem Mitnahmebolzen 34, welcher in den Kupplungsbolzen 19 quer zu dessen Achse eingesetzt ist. Dann wird, wie weiter oben schon angedeutet, der Kupplungsbolzen 19 von dem Aufwerfhebel 26 nach oben verschoben. Die Stellung, in welcher der Aufwerfhebel in Eingriff mit dem Mitnahmebolzen tritt ist in Fig. 11 angedeutet. Schießlich gelangt eine Rastausnehmung 26c des Aufwerfhebels 26 in den Bereich des Mitnahmebolzens 34. Dann ist eine am oberen Ende des Kupplungsbolzens 19 verankerte Schraubendruckfeder 35 gegen eine Anlagefläche 36 an dem oberen Ende des Gehäuses 22 getreten. Diese Feder ist dabei komprimiert worden. Wenn nun der Kupplungsbolzen einmal bis zum Anschlag an dem oberen Ende des Gehäuses 22 gelangt ist und danach der Handbetätigungshebel 24 freigegeben wird, so rastet der Mitnahmebolzen 34 unter der Wirkung der Schraubendruckfeder 35 in die Rastausnehmung 26c ein, so daß nach einer geringfügigen Abwärtsbewegung der Kupplungsbolzen seine obere Totpunktlage erreicht (siehe Fig. 4) und nicht über diese hinaus nach unten gehen kann; gleichzeitig kann auch der Handbetätigungshebel 24 trotz der auf die Handbetätigungswelle 25 wirkenden Vorspannfedern 27 nicht in die Ruhelage gemäß Fig. 1 zurückkehren. Damit befindet sich der Kupplungsbolzen in seiner der oberen Totpunktlage (Fig. 4) entsprechenden Lösestellung. Die Kupplungsöse 20 kann dann durch entsprechendes Vorfahren des Zugfahrzeugs aus der Anhängerkupplung ausgezogen werden. Dabei wird Dank einer entsprechenden Höheneinstellung des Kupplungsbolzens 19 in seiner oberen Totpunktstellung (siehe Fig. 4) in Abstimmung auf das Höhenmaß der Kupplungsöse 20 der Kupplungsbolzen 19 geringfügig angehoben. Wie wiederum aus Fig. 4 zu erkennen ist, löst sich dabei der Eingriff zwischen dem Mitnahmebolzen 34 und der Rastausnehmung 26c. Der Aufwerfhebel 26 wird dann durch die Torsionsfedern 28 sofort in Gegenzeigersinn verdreht und fällt mit seinem unteren Ende 26a auf den Schlitzboden 19a1 zurück. Sobald die Zugöse 20 vollständig aus dem Bereich des Kupplungsbolzens 19 zurückgezogen ist kann der Kupplungsbolzen 19 in seine untere Totpunktstellung UT zurückfallen, die in Fig. 1 dargestellt ist, und der Aufwerfhebel 26 kann dann mit seinem unteren Ende 26a dem Schlitzboden 19a1 unter der Wirkung der Torsionsfedern 27 folgend in die Ruhestellung gemäß Fig. 1 zurückkehren.

Will man später zur Vorbereitung eines erneuten Ankuppelns des Nachlauffahrzeugs den Kupplungsbolzen 19 wieder in die obere Totpunktlage zurückführen, so bedarf es eines erneuten Drehens des Betätigungshebels 24 bis erneut eine Verrastung zwischen der Rastausnehmung 26c und dem Mitnahmebolzen 34 eintritt. Die bis dahin stattfindenden Vorgänge wurden bereits weiter oben beschrieben.

An dem Kupplungsbolzen können durch die Kupplungsöse 20 erhebliche Kräfte angelegt werden, welche den Kupplungsbolzen in der Kupplungsstellung UT nach oben bewegen wollen. Diese erheblichen Kräfte können bei der soweit beschriebenen Ausgestaltung der Kupplung wenigstens zu einem erheblichen Teil von dem Sicherungsbolzen 29 aufgenommen werden. Dieser Sicherungsbolzen ist nun, wie bereits weiter oben beschrieben, in einer Führungsbohrung 17a1 geführt, welche in dem Fußteil 17a der Führungsbuchse 17 ausgebildet ist. Die Kupplungsbuchse kann ohne großen Aufwand aus einem hochfesten Werkstoff hergestellt und mit hoher Haltekraft durch die Schrauben 18 an dem Kupplungskörper 10, d.h. an dessen oberem Gabelteil 16, befestigt sein. Beispielsweise besteht die Buchse 17 mit ihrem Fußteil 17a aus hochfestem geschmiedeten und gegebenenfalls vergüteten Stahl.

Aus Fig. 2 ist zu erkennen, daß mit dem Sicherungsbolzen 29 ein Bolzenschaft 29a verbunden ist, welcher auch die Schraubendruckfeder 30 stabilisiert. Dieser Bolzenschaft 29a durchsetzt das Gehäuse 22. Der Schaft 29a ist aber mit dem Sicherungsbolzen 29 so lose verbunden oder mit solchem Spiel durch das Gehäuse 22 hindurchgeführt oder derart elastisch verformbar, daß alle wesentlichen, von dem Kupplungsbolzen 19 bei dessen Aufwärtsbelastung durch die Zugöse 20 auftretenden Kräfte von dem Sicherungsbolzen 29 im wesentlichen vollständig auf die Führungsbohrung 17a1 übertragen werden und nicht auf das Gehäuse 22. Als Folge hiervon kann das Führungsgehäuse aus einem Material relativ geringer Festigkeit hergestellt werden, zumindest im Bereich der Durchführung des Schafts 29a. Dies ist von erheblichem Vorteil, weil auf solche Weise das Gehäuse 22 aus einem verhältnismäßig preiswerten Material wie Leichtmetallguß oder Kunststoff ohne Herabsetzung der Sicherheitseigenschaften hergestellt werden kann.

Es ist hier anzumerken, daß eine Sicherungsfunktion wie oben angedeutet, auch von dem unteren Teil 26a des Aufwerfhebels 26 übernommen wird. Kräfte, die bei einer Aufwärtsbelastung des Kupplungsbolzens 19 auf den Aufwerfhebel 26 von dem Schlitzgrund 19a1 her übertragen werden, müssen zugegebenermaßen auf die Lager 25a der Betätigungswelle 25 und damit letztlich auf das Gehäuse 22 übertragen werden. Aus diesem Grunde ist das Prinzip der Kräfteisolierung zwischen Kupplungsbolzen und Gehäuse 22 noch nicht bis zur letzten Konsequenz durchgeführt. Gleichwohl lassen sich erhebliche Vorteile erzielen, etwa dann, wenn man die beiden Sicherungssysteme, deren eines auf dem Aufwerfhebel 26, 26a und deren anderes auf dem Sicherungsbolzen 29 aufgebaut ist so aufeinander abstimmt, daß zunächst der Sicherungsbolzen 29 belastet wird.

Auf weitere Maßnahmen zur konsequenten Weiterführung des Prinzips der kräftemäßigen Isolierung von Kupplungsbolzen 19 und Gehäuse 22 wird im folgenden noch eingegangen. Es sei aber schon hier vermerkt, daß auch etwaige Querkräfte auf den Kupplungsbolzen, die bei Zug- oder Schubeinwirkung auf die Zugöse 20 auftreten könnten, nicht in das Gehäuse 22 eingeleitet werden, sondern ausschließlich in die Führungsbuchse 17 und über diese unmittelbar in den oberen Gabelteil 16.

Bevor aber nun auf diese Weiterführung des genannten Prinzips anhand weiterer Ausführungsbeispiele eingegangen wird, sei zunächst eine weitere Besonderheit behandelt, welche in der Ausführungsform nach den Fig. 1 und 2 angedeutet ist.

Es bedarf zunächst einer weiteren Erläuterung der Konstruktion der Anhängerkupplung. In dem unteren Gabelteil 15 ist eine untere Führungsbuchse 38 im Preßsitz aufgenommen, welche in der unteren Totpunktlage UT des Kupplungsbolzens 19 das untere Ende des Kupplungsbolzens aufnimmt und unter Belastung stützt. An der Oberseite des unteren Gabelteils 15 ist um die untere Führungsbuchse 37 herum ein Auflagerelement 38 angeordnet. Dieses ist als ein Verschleißteil ausgebildet. Auf seine Befestigung und Auswechselbarkeit wird später eingegangen. Das Auflagerelement 38 ist als Stütze für die ein- und ausfahrende Zugöse 20 hohem Verschleiß ausgesetzt. Weiterhin ist ein Kupplungsmaul 39 vorgesehen, welches um die Kupplungsbolzenachse Kx drehbar gelagert ist und zwar einmal an der oberen Führungsbuchse 17 und andererseits über einen Lagerlappen 39a an der unteren Führungsbuchse 37. Eine schematisch angedeutete Rückstellfeder 40 versucht das Kupplungsmaul 39 in einer Mittelstellung in Flucht mit der Achse Ax zu halten und bei Auslenkung in diese Mittelstellung zurückzudrehen. Diesem Kupplungsmaul kommt vorallem die Aufgabe zu beim Ankuppeln der Zugöse 20 an die Anhängerkupplung die Zugöse 20 durch ihre Seitenwände 39b in Fluchtstellung mit dem Kupplungsbolzen 19 einzuführen, damit der Kupplungsbolzen 19 nachfolgend in das Lumen der Zugöse 20 einfahren kann. Hierzu ist es erwünscht, daß das Kupplungsmaul 39 beim Ankupplungsvorgang gegenüber dem Kupplungskörper 10 unverdrehbar festgelegt ist. Andererseits ist es erwünscht, daß im Fahrbetrieb, insbesondere in einem rauhen Baustellenfahrbetrieb, wo mit großen Einschlagwinkeln zwischen dem Zugfahrzeug und der Deichsel des Nachlauffahrzeugs gerechnet werden muß, das Kupplungsmaul 39 frei drehbar ist, damit eine der Zugöse 20 zugeordnete Deichsel das Kupplungsmaul mitdrehen kann, wenn die Deichsel gegen eine der Seitenwände 39b anschlägt. Es besteht daher ein Bedarf für eine Arretierung des Kupplungsmauls 39 gegenüber dem Kupplungskörper 10. Eine solche Arretierung ist bei 41 in Fig. 1 dargestellt. Diese Kupplungsmaularretierung umfaßt einen Sperrbolzen 41a, welcher in einer Sperrbolzenführung 41b des Kupplungskörpers 10 höhenverschiebbar geführt ist und mit einer Sperrausnehmung 41c des Kupplungsmauls zum Eingriff gebracht werden kann. In Fig. 1 ist der Sperrbolzen 41a aus der Sperrausnehmung 41c nach oben zurückgezogen entsprechend dem oben beschriebenen erwünschten Verhalten, da im Einkupplungszustand (Kupplungsbolzen in der unteren Totpunktlage UT) das Kupplungsmaul 39 frei drehbar sein soll um die Achse Kx.

Wenn die Anhängerkupplung in Ankupplungsbereitschaftsstellung sich befindet (wie in Fig. 4 dargestellt), d.h., wenn sich der Kupplungsbolzen 19 in seiner oberen Totpunktstellung befindet, so ist wie ebenfalls in Fig. 4 dargestellt, der Aufwerfhebel 26 gegenüber seiner Stellung in Fig. 1 im Uhrzeigersinn um ca. 90° verdreht. Dann ist, wie wiederum in Fig. 4 dargestellt, eine erste Kurve 41d so weit um die Achse der Betätigungswelle 25 mit dieser verdreht worden, daß der Sperrbolzen 41a nach unten verschoben ist und in die Sperrausnehmung 41c eingreift und somit das Kupplungsmaul in seiner Mittelstellung unverdrehbar festhält. Dann kann das Einkuppeln der Zugöse 20 erfolgen ohne daß sich das Kupplungsmaul dabei drehen kann. Wenn nun nach einer Fahrbetriebsperiode ausgekuppelt werden soll, so bedeutet dies, daß der Aufwerfhebel 26 ebenfalls im Uhrzeigersinn verdreht wird und die erste Kurve 41d wiederum das Bestreben hat, den Sperrbolzen 41a nach unten zu verschieben. Dann kann es aber wegen Schrägstellung der mit der Zugöse verbundenen Deichsel passieren, daß das Kupplungsmaul sich in einer gegenüber seiner Mittellage verdrehten Stellung befindet, in welcher der Sperrbolzen 41a nicht in die Sperrbolzenausnehmung 41c hineinfinden kann. Um in dieser Situation keine Beschädigung an dem Aufwerfhebel 26 und an dem Sperrbolzen 41a entstehen zu lassen, wirkt die erste Kurve 41d auf den Sperrbolzen 41a nicht direkt ein, sondern über eine Nockenfolgerkugel 41e, welche an dem Sperrbolzen 41a durch eine Schraubendruckfeder 41f abgestützt ist. Dabei ist die Schraubendruckfeder 41f in einer Sackbohrung 41g des Sperrbolzens 41a aufgenommen. Befindet sich nun bei einem Auskupplungsvorgang, d.h. bei einem Verschwenken des Aufwerfhebels 26 im Uhrzeigersinn gemäß Fig. 1 die Sperrausnehmung 41c außer Flucht mit dem Sperrbolzen 41a, so kann zwar der Sperrbolzen 41a nicht nach unten bewegt werden, die Nockenfolgerkugel 41e kann aber unter Kompression der Schraubendruckfeder 41f nach unten in die Bohrung 41g hineingedrückt werden, so daß die Kurve 41d sich an den oberen Ausgang der Bohrung 41g annähern kann. Dabei wird die Vorspannung der Schraubendurckfeder 41f erhöht. Wenn dann nach Ausfahren der Zugöse 20 aus der Anhängerkupplung das Kupplungsmaul unter der Wirkung der Rückstellfeder 40 in seine Mittellage gegenüber der Achse Ax zurückkehrt, so kann der Sperrbolzen 41a unter der Wirkung der vorgespannten Schraubendruckfeder 41f in die Sperrausnehmung 41c einfahren um dann allerdings in Folge des wieder nach unten gehenden Kupplungsbolzens 19 und des dabei im Gegenzeigersinn verschwenkenden Aufwerfhebels 26 sofort wieder in die angehobene Stellung gemäß Fig. 1 zurückkehren.

Beim Anheben des Kupplungsbolzens in die Ankupplungsbereitschaftsstellung ist kaum mit einer Außerfluchtstellung des Sperrbolzens 41a gegenüber der Sperrausnehmung 41c zu rechnen, weil dann die Rückstellfeder 40 das Kupplungsmaul 39 zwangsläufig in der Mittelstellung hält, in welcher der Sperrbolzen 41a mit der Sperrausnehmung 41c fluchtet. Aber auch in dieser Situation ist insbesondere bei Kupplungen mit langer vorangehender Betriebsdauer die Ausgestaltung der Arretierungsvorrichtung 41c wie vorstehend beschrieben hilfreich.

Es muß nun folgendes beachtet werden: Der Sperrbolzen 41a muß natürlich auch angehoben werden, wenn der Kupplungsbolzen 19 nach unten in seine untere Totpunktlage geht, damit im Fahrbetrieb das Kupplungsmaul 39 gegenüber dem Kupplungskörper 10 frei drehbar ist. Zu diesem Zweck ist an dem Aufwerfhebel 26 ein Fenster 41h mit einer zweiten Kurve 41i angebracht. Wenn der Aufwerfhebel 26 im Gegenzeigersinn verschwenkt wird, ausgehend von der in Fig. 4 gezeigten Stellung, so wird der Sperrbolzen 41a zwangsläufig angehoben, dadurch, daß ein mit dem Sperrbolzen 41a starr verbundener Nockenfolgerstift 41j an der zweiten Kurve 41i entlanggleitet. Da nun die zweite Kurve 41i von dem großen Fenster 41h gebildet ist, kann der Nockenfolgerstift 41j von der zweiten Kurve 41i abheben, wenn bei einer Verdrehung des Aufwerfhebels aus der Stellung gemäß Fig. 1 im Uhrzeigersinn der Sperrbolzen 41a zunächst wegen Außerfluchtstellung zu der Sperrbolzenaufnahme 41c nicht nach unten verschoben werden kann, sondern nur die Kurvenfolgerkugel 41e gegen die Wirkung der Schraubendruckfeder 41f nach unten verschoben werden kann.

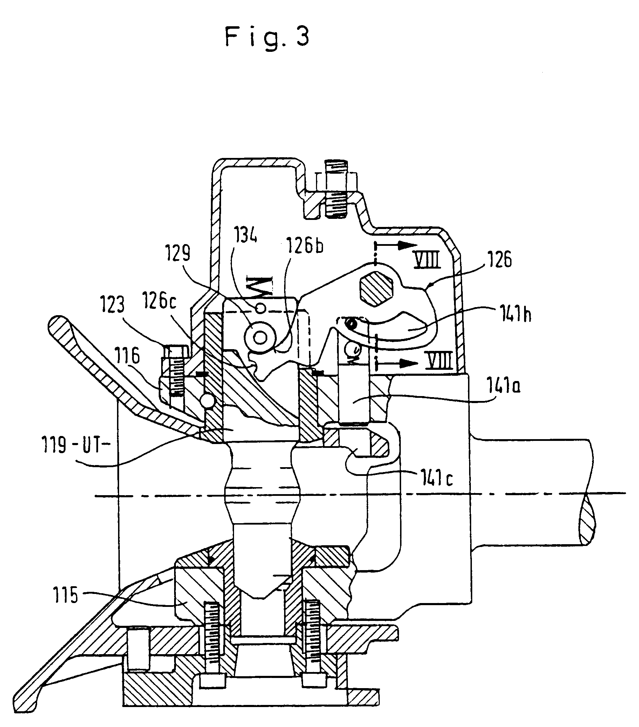

In Fig. 3 erkennt man den Kupplungsbolzen 119 in seiner unteren Totpunktstellung UT. Analoge Teile sind mit gleichen Bezugszeichen versehen wie in den Figuren 1 und 2, jeweils vermehrt um die Zahl 100. Man erkennt im einzelnen hier noch einmal das Zusammenwirken des Mitnehmerbolzens 134 mit der Aufwerfkante 126b (Fig. 3) und das Zusammenwirken des Mitnehmerbolzens 134 mit der Rastausnehmung 126c entsprechend der oberen Totpunktstellung OT. Der Aufwerfhebel 126 kann auch hier wie in Figuren 1 und 2 gezeigt, mit einen Sicherungsbolzen 129 zusammenwirken. Weiter kann man in Fig. 4 den Aufbau der Arretierungseinrichtung 141 mit dem Arretierbolzen 141a, der Führungsbohrung 141b, der Rastausnehmung 141c, der ersten Kurve 141d, der Kurvenfolgerkugel 141e, der Schraubendruckfeder 141f, der Bohrung 141g, dem Fenster 141h, der zweiten Kurve 141i und dem Kurvenfolgerstift 141j wegen des größeren Maßstabs besser erkennen. Die Funktion dieser Arretierungseinrichtung ist bereits unter Bezugnahme auf Fig. 1 und 2 beschrieben worden.

Abweichend von der Ausführungsform nach Fig. 1 und 2 ist in Fig. 3 und 4 die Ausbildung der Führungsbuchse 117. Diese ist hier an ihrem unteren Ende mit einem Anschlagbund 117d versehen, der sich an die Unterseite des Gabelteils 116 anlegt, wenn die Führungsbuchse 118 von unten in die Bohrung 116b des Gabelteils 116 einepreßt wird. Dabei ist eine vorläufige Sicherung durch eine Kugel 116c gewährleistet. Die Endsicherung gegen Abwärtsverschiebung der Führungsbuchse 117 innerhalb des Kupplungskörpers 110 kann von einem Federring 117e übernommen werden, der in eine Ringnut der oberen Führungsbuchse 117 einschnappt und auf der Oberseite des Gabelteils 116 aufliegt.

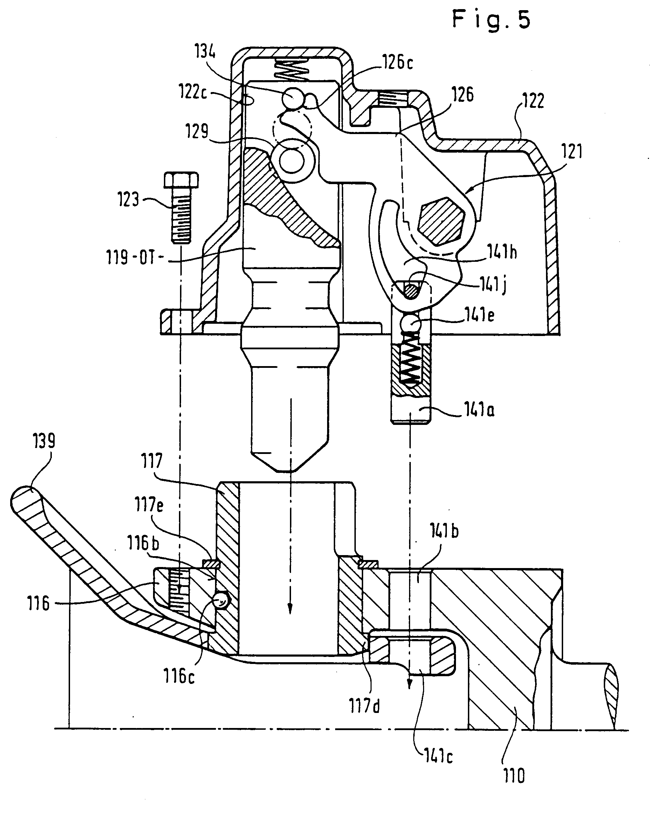

Eine weitere aus Fig. 4 und insbesondere aus der zugehörigen Fig. 5 erkennbare Besonderheit ist folgende:

In dem Gehäuse 122 ist eine Zusatzführung 122c für den Kupplungsbolzen 119 vorgesehen. In Fig. 5 ist der Kupplungsbolzen 119 mit der Stellmechanik 121 und dem Gehäuse 122 sowie dem Sperrstift 141a zusammen vormontiert. Man erkennt aus dem unteren Teil der Fig. 5, daß die Führungsbuchse 117 bereits in dem oberen Gabelteil 116 von unten her eingesetzt ist, was natürlich einen entsprechend groß bemessenen Abstand zwischen dem oberen Gabelteil und dem unteren Gabelteil 115 voraussetzt. Der Kupplungsbolzen 119 ist dabei in der Zusatzführung 122c positioniert und durch den Aufwerfhebel 126 in einer Relativlage zu dem Gehäuse 122 gehalten, welche der betriebsmäßigen Lösestellung oder oberen Totpunktlage entspricht; der Mitnehmerbolzen 134 greift in die Rastkerbe 126c ein. Der Aufwerfhebel 126 kann also trotz der Wirkung der auch schon vormontierten Torsionsfedern (siehe 27 in Fig. 2) nicht nach unten gehen. Gleichzeitig nimmt der Sperrbolzen 141a eine Tiefstlage gegenüber dem Gehäuse 122 ein. Dies bedeutet, daß das Gehäuse mit dem darin vormontierten Kupplungsbolzen 119, mit der darin ebenfalls vormontierten Stellmechanik 121 und mit dem Sperrbolzen 141a ohne Überwindung von Federkräften leicht auf den oberen Gabelteil 116 aufgesetzt und befestigt werden kann, wobei beim Aufsetzen der Kupplungsbolzen 119 in die Führungsbuchse 117 und der Sperrbolzen 141a in die Führungsbohrung 141b einfahren kann und damit gleichzeitig die Winkeljustierung des Gehäuses 122 gegenüber dem oberen Gabelteil 116 bestimmt wird. Das Gehäuse 122 braucht dann nur noch durch die Befestigungsschrauben 123 festgeschraubt zu werden.

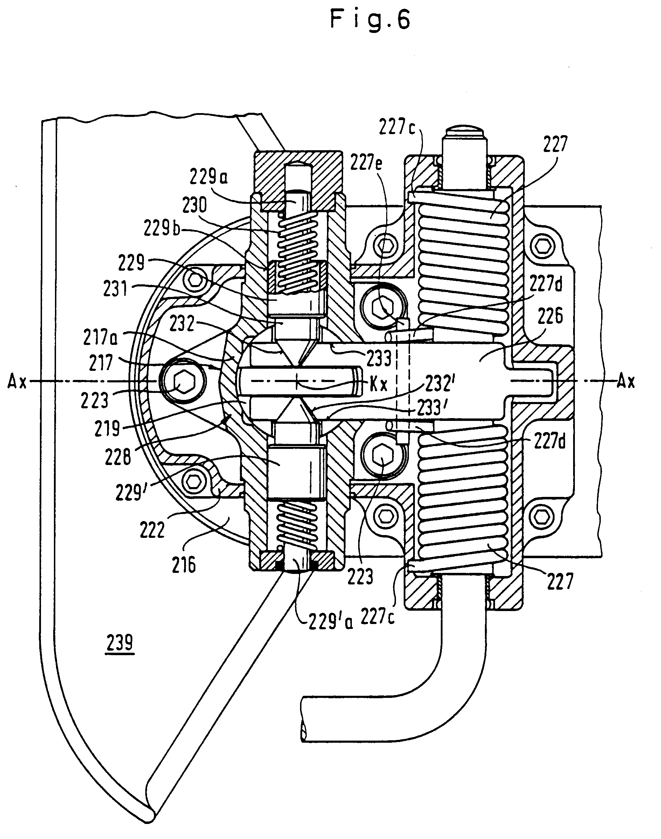

Unter Bezugnahme auf Fig. 1 und 2 wurde dargelegt, daß die dortige Ausführungsform noch nicht vollständige Entlastung des Gehäuses 22 von Kräften bringt, welche in Folge Bewegungen der Zugöse eine Aufwärtsbewegung des Kupplungsbolzens bewirken wollen, weil dort die häufig geforderte zweite Sicherung noch von dem Aufwerfhebel 26 selbst übernommen wurde. Man kann und dies wird nunmehr in Fig. 6 gezeigt, eine vollständige Isolierung solcher Kräfte von dem Kupplungsgehäuse dadurch bewirken, daß man zwei Sicherungsbolzen in dem Fußteil 217a der Führungsbuchse vorsieht. In Fig. 6 ist der eine Sicherungsbolzen analog zu Fig. 1 und 2 mit 229 bezeichnet. Es ist genau so ausgebildet wie in Fig. 1 und 2. Analoge Teil sind mit gleichen Bezugszeichen versehen wie dort. Die Aufwerfkante 233 des Aufwerfhebels 226 wirkt mit der konischen Nockenfläche 232 zusammen und im weiteren Verlauf des Anhebens des Kupplungsbolzens 219 kann dessen Umrißkante gegebenfalls abgefast mit der Nockenfläche 232 zusammenwirken, um den Sicherungsbolzen 229 weiter zurückzuschieben. Darüber hinaus erkennt man in Fig. 6 einen Sicherungsbolzen 229' der ähnlich ausgebildet ist wie der Sicherungsbolzen 229 und durch eine Ausrückkante 233' des Aufwerfhebels 226 zurückgeschoben werden kann, zumindest soweit, daß auch dort wieder der Umriß des Kupplungsbolzens selbst - gegebenenfalls abgefast - in Eingriff mit der konischen Nockenfläche 232' zusammentritt. Auch hier wieder kann der Umriß des Kupplungsbolzens zum Zusammenwirken mit der konischen Nockenfläche 232' angefast sein. Beide Sicherungsbolzen 229 und 229' sind in dem Fußteil 217a der Führungsbuchse 217 geführt, die hier, genau so wie in Fig. 1 und 2 gezeigt, durch Schrauben 223 mit dem oberen Gabelteil 216 aufgeschraubt und von dem Gehäuse 222 ohne kraftübertragende Verbindung eingeschlossen ist. Die beiden Sicherungsbolzen 229 und 229' können gleichzeitig oder in zeitlicher Versetzung von dem Aufwerfhebel 226 ausgerückt werden. Von den beiden Sicherungsbolzen 229 und 229' ist hier nur einer mit einem außen erkennbaren Schaft 229'a versehen, der als Anzeige dafür wirksam ist, ob die Sicherung insgesammt 228 wirksam ist oder nicht.

Es ist ohne weiteres zu verstehen, daß beide Sicherungsbolzen mit je einem sichtbar hervortretenden Schaft 229a bzw. 229'a versehen sein können mit dem Ziele, die Sicherungs- und Nicht-Sicherungsposition noch deutlicher zu machen, unabhängig davon, wo der Bedienungsmann gerade hinschaut. Die Fig. 6 läßt darüber hinaus in vergrößerter Darstellung die Torsionsfedern 227 erkennen, die einerseits bei 227c an dem Gehäuse 222 abgestützt sind und andererseits bei 227d an einem Mitnahmestift 228e anliegen, welcher von dem Aufwerfhebel 226 getragen wird. Es ist ohne weiteres erkennbar, daß bei dieser Ausführungsform nunmehr alle größeren Kräfte von dem Gehäuse 222 ferngehalten sind, insbesondere wenn auch die Sperreinrichtung gemäß Fig. 1 bis 5 zur Anwendung kommt und dabei der Sperrstift (dort mit 41a bzw. 141a) kräfteübertragend nur zwischen dem Kupplungskörper 10 bzw. 110 und dem Kupplungsmaul 39 bzw. 139 wirksam ist und keine Kraftübertragung auf den Aufwerfhebel 26 bzw. 126 übernimmt. Somit kann das Gehäuse insgesamt leicht und aus wohlfeilem Werkstoff hergestellt werden.

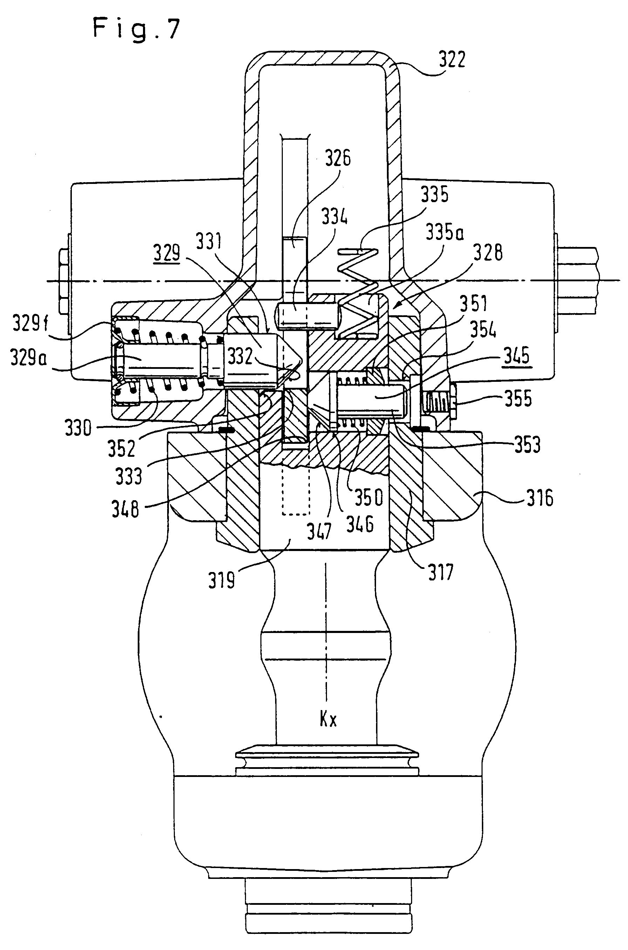

Eine weitere Ausführungsform, wiederum mit dem Ziele, Sicherungskräfte von dem Gehäuse 322 fernzuhalten, ist in Fig. 7 dargestellt. Hier erkent man, ähnlich gestaltet wie in Fig. 1 bis 6, einen Sicherungsbolzen 329 der kraftübertragend in einer Führungsbuchse 317 geführt ist und mit seinem Schaft 329a keine wesentlichen Käfte auf das Gehäuse 322 übertragen kann. Hierzu ist der Abstütz- und Führungsring 329f als dünnwandiger Blechring ausgebildet, der im wesentlichen nur Stützfunktion für die Feder 330 ausübt, aber aufgrund seiner Nachgiebigkeit keine Kräfte auf das Gehäuse 322 übertragen kann.

Ein zweites Sicherungslement ist hier grundsätzlich anders ausgebildet als bisher beschrieben. Dieses zweite Sicherungselement der Sicherung 328 ist hier von einem Sicherungsbolzen 345 gebildet, welcher in einer Führungsbohrung 346 des Kupplungsbolzens 319 aufgenommen und geführt ist. Der Sicherungsbolzen 345 weist eine konische Nockenfläche 347 auf, welche mit einer Kante 348 des Aufwerfhebels 326 zusammenwirkt. Der Sicherungsbolzen 345 ist durch eine Schraubendruckfeder 350 beaufschlagt, welcher an einer in der Bohrung 346 fixierten Stützscheibe 351 abgestützt ist und den Sicherungsbolzen 345 in Fig. 7 nach links verschieben will. Wenn der Aufwerfhebel 326 angehoben wird (Bewegung im Uhrzeigersinn gemäß Fig. 1) so rückt zuerst die Kante 333 den Sicherungsbolzen 329 nach links aus bis die Anfasung 352 im Zuge der Aufwärtsbewegung = Verschwenkung im Uhrzeigersinn des Aufwerfhebels 326 und der dabei erfolgenden Mitnahme des Kupplungsbolzens 319 die weitere Ausrückung des Sicherungsbolzens 329 übernimmt. Gleichzeitig oder kurz nachher gelangt die konische Nockenfläche 347 in den Bereich der Kante 348 des Aufwerfhebels, so daß dann der Schaft 353 aus der Sicherungsbohrung 354 der Führungsachse 317 zurücktreten kann und daß auch der die zweite Sicherung 345, 354 frei wird. Es ist klar, daß die beiden Sicherungen frei werden müssen, bevor der Aufwerfhebel 326 durch Mitnahme des Kupplungsbolzens 319 die beiden Sicherungen belastet. Man erkennt in Fig. 7 erneut den Mitnahmebolzen 334 und erkennt dabei auch, daß dieser neben seiner Mitnahmefunktion bezüglich des Kupplungsbolzens 319 die zusätzliche Funktion hat, die Schraubendruckfeder 335 in einer Mitnahmebohrung 335a am oberen Ende des Kupplungsbolzens 319 zu sichern.

Der Schaft 353 des Sicherungsbolzens 345 steht einer Gewindebohrung in dem Gehäuse 322 gegenüber. Hier kann eine mechanische oder elektrische Sensorik angeschlossen werden um die Position des Sicherungsbolzens einer Fernanzeigevorrichtung zu melden. Durch Abschrauben der in Fig. 7 dargestellten Schraubzapfens 355 wird es auch möglich, auf den Schaft 353 dann mit einem Werkzeug einzuwirken, wenn sich durch eine Überlastung des Sicherungsbolzens 345 eine Verklemmung desselben ergeben haben sollte und dieser bei Aufwärtsschwenken im Uhrzeigersinn gemäß Fig. 1 des Aufwerfhebels 326 nicht sofort durch die Schraubendruckfeder 350 in die Freigabestellung gegenüber der Bohrung 354 treten sollte, weil die Schraubendruckfeder 350 zu schwach ist. Es ist ohne weiteres zu erkennen, daß auch bei dieser Ausführungsform gemäß Fig. 7 das Gehäuse 322 von Kräften auf die Sicherungsmittel 328 vollständig entlastet ist. Auch bei dieser Ausführungsform kann eine etwa vorhandene Sperreinrichtung entsprechend 141 in Fig. 4 so ausgeführt sein, daß auch im Bereich der Sperreinrichtung keine großen Kräfte auf das Gehäuse 322 übertragen werden.

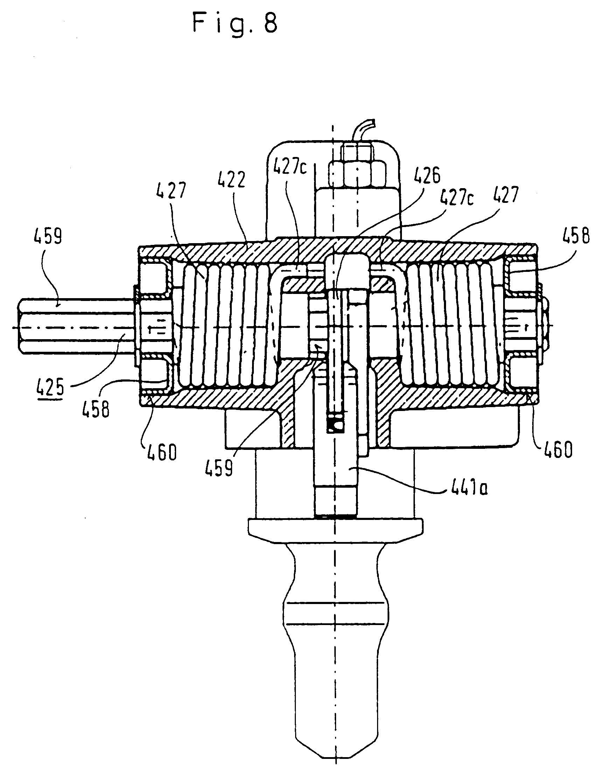

In Fig. 8 erkennt man die Lagerung der Betätigungswelle 425 innerhalb des Gehäuses 422. Die Betätigungswelle 425 ist hier in dem Gehäuse 422 durch ringtrogförmige Lagerringe 458 gelagert. Man erkennt an der Betätigungswelle 425 einen Mehrkant 459 an dem ein Betätigungshebel unverdrehbar festgelegt werden kann. Man erkennt weiter, daß der Mehrkant 459 auch im Bereich der Verbindung zwischen Betätigungswelle 425 und Aufwerfhebel 426 vorgesehen ist, um den Aufwerfhebel 426 unverdrehbar an der Betätigungswelle 425 festzulegen. Die Torsionsfedern 427 sind hier einmal bei 427c an dem Gehäuse 422 festgelegt und greifen andererseits an den Ringen 458 an, die unverdrehbar auf der Betätigungswelle 425 sitzen und in hohlzylindrischen Lagerflächen 460 des Gehäuses 422 drehbar gelagert sind.

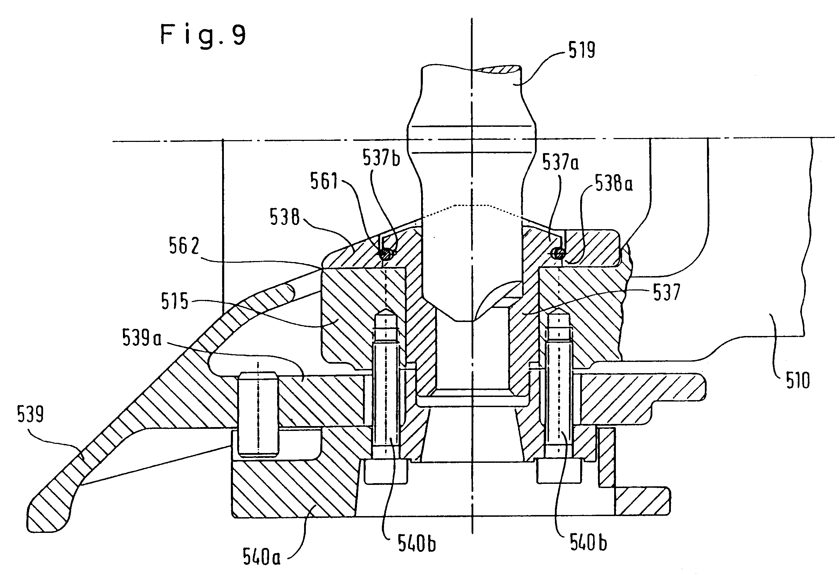

In Fig. 9 erkennt man den unteren Gabelteil 515 des Kupplungskörpers 510 in welchen die untere Führungsbuchse 537 für den Kupplungsbolzen 519 eingepreßt ist. Auf der Oberseite des unteren Gabelteils 515 ist an dem Anschlagbund 537a der unteren Führungsbuchse 538 ein Auflagerelement 538 gelagert und zwar unverdrehbar wenn das Auflagerelement nicht rotationssymmetrisch ist. Es interessiert hier besonders die Fixierung des Auflagerelements 538 an dem Anschlagbund 537a: In diesen ist eine nach radial außen offene Ringnut 537b eingelassen, die einen einengbaren geschlitzten Sicherungsring 561 aufnimmt. Dieser geschlitzte Sicherungsring 561 wird von einer Schulter 538a des Auflagerelements 538 untergriffen; das Auflagerelement ist unter Einengung des Sicherungsrings 561 mit seiner Schulter 538a unter den Sicherungsring 561 einschnappbar. Ein Abheben des durch Verschleiß unbrauchbar gewordenen Auflagerelements 538 ist nur durch gewaltsames Einführen eines Meissels oder Schraubenziehers in den Spalt 562 möglich, wobei das regelmäßig aus Bronze oder Kunststoff bestehende Auflagerelement 538 zerstört wird ohne die untere Führungsbuchse 537 zu beschädigen. Das Auflagerelement 538 wird dabei regelmäßig zerstört. Dies schadet nichts, da es ohnehin verschlissen ist. An der Unterseite des unteren Gabelteils 515 ist eine Abstützvorrichtung 540a für die Feder (in Fig. 1 mit 40 bezeichnet) befestigt. Die Befestigung erfolgt durch Befestigungsbolzen 540b, welche Langlöcher des Befestigungslappens 539a des Kupplungsmauls 539 durchgreifen.

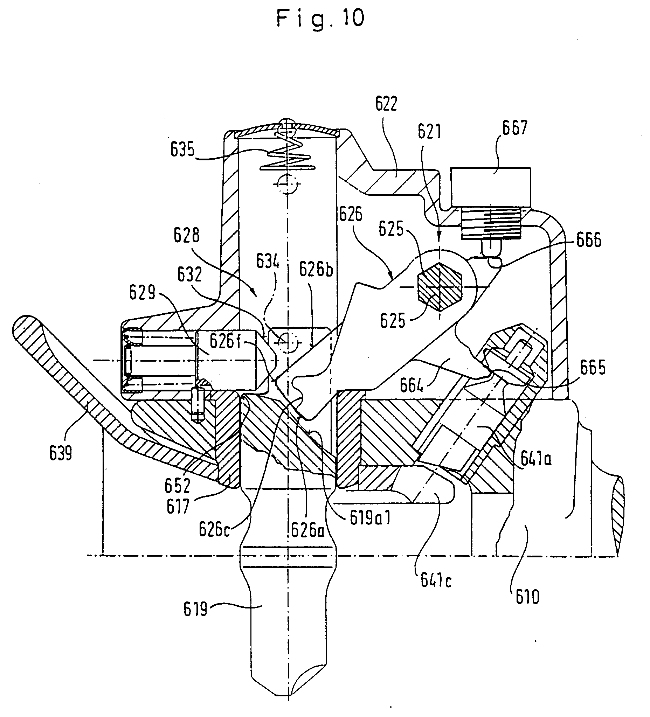

Die Fig. 10 bis 14 dienen dazu, in verschiedenen Zuständen einer Anhängerkupplung von grundsätzlich einem dem Fig. 1 und 2 entsprechenden Aufbau die Gestaltung und Wirkungsweise eines neuartigen Aufwerfhebels 626 mit entsprechender Funktion wie in Fig. 1 und 2 darzustellen. Man erkennt die Aufwerfkante 626b und eine Rastausnehmung 626c zum Zusammenwirken mit dem Mitnehmerbolzen 634. Man erkennt ferner eine Kante 626a, die dem unteren Ende 26a in Fig. 1 entspricht. Man erkennt ferner auf dem Aufwerfhebel einen Sporn 664, der zum Zusammenwirken mit einer Einschnürung 665 eines Sperrbolzens 641a bestimmt ist. Der Sperrbolzen 641a entspricht in seiner Sperrfunktion dem Sperrbolzen 41a der Arretierungsvorrichtung 41 nch Fig. 1 und 2 und wirkt mit einer Sperrausnehmung 641c des Kupplungsmauls 639 zusammen sowie im Zusammenhang mit Fig. 1 und 2 beschrieben. Man erkennt schließlich an dem Aufwerfhebel 626 einen Ausleger 666, der mit einem Steuerventil 667 zusammenwirkt, letzteres an dem Gehäuse 622 angebracht.

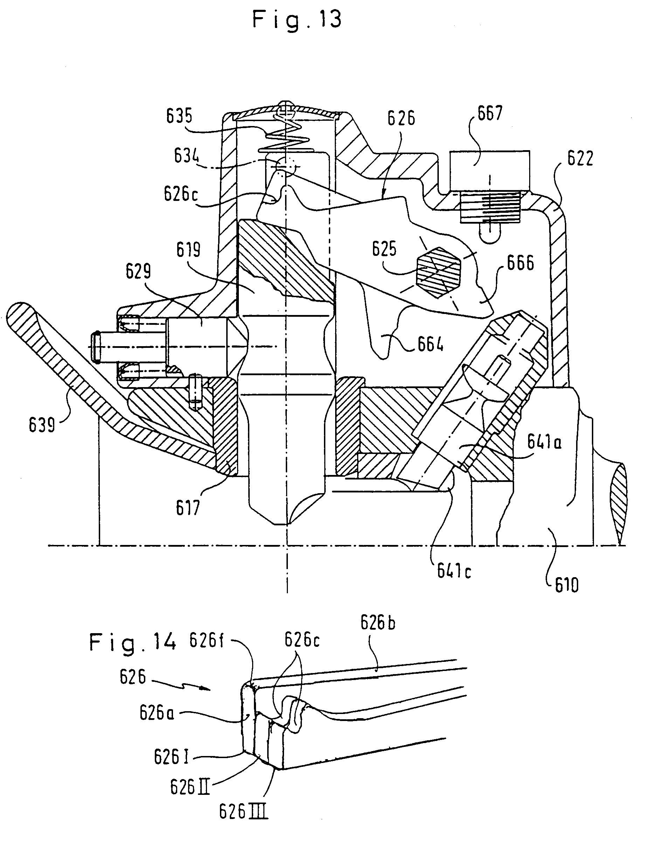

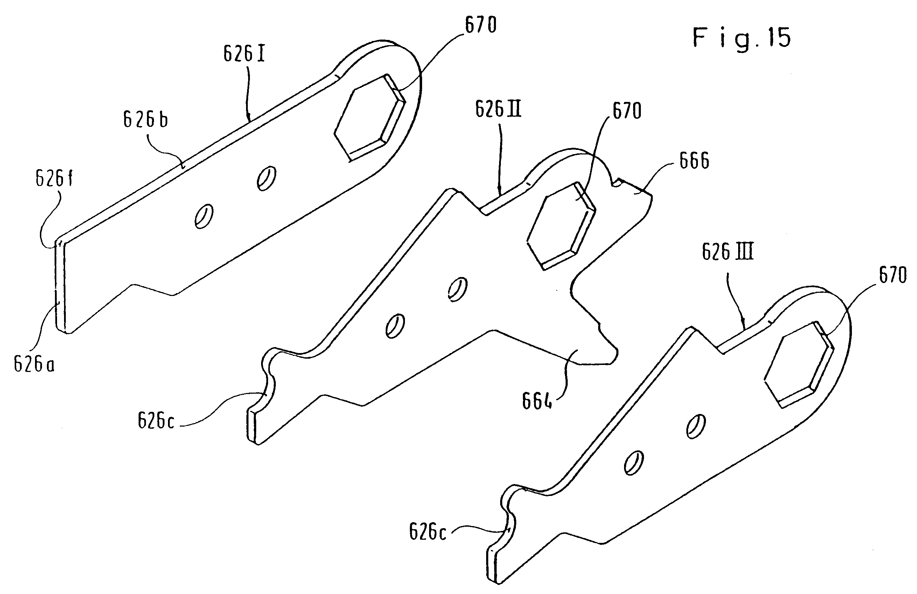

Wie aus Fig. 14 und 15 zu ersehen, ist der Aufwerfhebel 626 aus drei Platinen 626I, 626II und 626III sandwichartig zusammengesetzt. An der Platine 626I ist die Steuerkante 626a angebracht, welche mit dem Schlitzgrund 619a1 zusammenwirkt und im Rahmen der Sicherungseinrichtung 628 die Funktion eines ersten Sicherungselements übernimmt. Weiterhin ist an der Platine 626I eine gekrümmte Ausrückecke 626f angebracht, welche zum Zusammenwirken mit der konischen Nockenfläche 632 des Sicherungsbolzens 629 bestimmt ist. An den Platinen 626II und 626III sind Rastkrümmungen angebracht, welche die Rastausnehmung 626c zum Zusammenwirken mit dem Mitnehmerbolzen 634 bilden. An der Platine 626II ist der Sporn 664 und der Ausleger 666 angebracht. In der Stellung gemäß Fig. 10 wirkt die Steuerungsfläche 626a mit dem Schlitzgrund 619a1 zusammen. Das Steuerventil 667, das beispielsweise einer Fernanzeigevorrichtung zugehört, ist von dem Ausleger 666 beaufschlagt und zeigt einen befriedigenden Sicherheitszustand für den Fahrer im Führerhaus an, so daß dieser losfahren kann. Der Sperrbolzen 641a ist aus der Sperrbolzenausnehmung 641c durch den Sporn 664 zurückgezogen, so daß das Kupplungsmaul 639 frei drehbar ist.

In Fig. 11 ist der Aufwerfhebel 626 bereits soweit im Uhrzeigersinn verschwenkt, daß die Steuerfläche 626a von dem Schlitzgrund 619a1 abgehoben hat und der Sicherungsbolzen bereits teilweise zurückgeschoben ist, so daß er fortan von dem Kupplungsbolzen 619 selbst noch weiter zurückgeschoben werden kann indem die gerundete Ecke 652 gegen die konische Nockenfläche 632 anläuft.

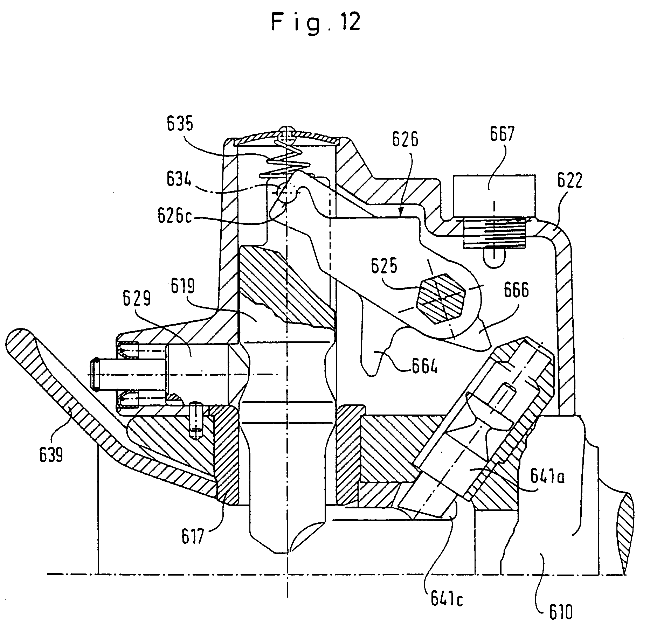

In Fig. 12 ist der Aufwerfhebel 626 soweit verschwenkt, daß die Rastkerbe 626c in Eingriff mit dem Mitnehmerbolzen 634 getreten ist und dieser Eingriff durch die Schraubendruckfeder 635 gesichert ist.

In Fig. 13 ist durch Einfahren der Zugöse (hier nicht dargestellt) der Kupplungsbolzen 619 kurzfristig angehoben worden, so daß der Aufwerfhebel unter der Wirkung der Torsionsfedern (siehe 27 in Fig. 1 und 2) auf den Kupplungsbolzen 619 zurückgefallen ist und dieser in die untere Totpunktlage, d.h. die Kupplungsstellung zurückkehren kann, wenn der Kupplungsbolzen 619 bei Ausrichtung auf das Lumen der Zugöse 20 nach unten gehen kann. In allen Stellungen mit Ausnahme derjenigen nach Fig. 10 ist das Steuerventil 667 von dem Ausleger nicht beaufschlagt, so daß der Fahrer das Signal "nicht gesichert" erhält.

Die Platinen 626I, 626II und 626III können nach beliebigen Herstellungsmethoden gefertigt werden, z.B. durch Stanzen, durch Laserstrahlschneidtechnik, durch Wasserstrahlschneidtechnik oder durch Elektronenstrahlschneidtechnik. Bevorzugt verwendet man dabei solche Schneidtechniken an, bei denen die Schnittkanten gesteuert erwärmt werden. Dies gilt insbesondere bei Anwendung der Laserstrahlschneidtechnik. Durch die Erwärmung kann dabei bei entsprechender Wahl eines Platinenwerkstoffs und gezielte Energiezufuhr eine Härtung erzielt werden. Es wird empfohlen, die Funktionskanten und -flächen der Platinen so zu gestalten, daß die Schnittflächen senkrecht zur Platinenebene ausgeführt werden können. In diesem Fall etwa notwendige Nockenwirkung kann dann durch entsprechende Gestaltung der mit den Schnittkanten zusammenwirkenden Eingriffsstellen von zu bewegenden Funktionsteilen erzielt werden.

Zu Figur 7 ist noch nachzutragen, daß im Schaft 329a nahe dem Sicherungsbolzen 329 eine Ringnut angesprochen ist. Diese Ringnut kann bei zurückgezogenem Sicherungsbolzen 329 einen Montagering aufnehmen, der ein Zurücktreten des Sicherungsbolzens 329 nach rechts verhindert, so daß das Gehäuse 322 mit dem vormontierten Sicherungsbolzen leicht auf den Kupplungskörper 310 mit der vormontierten Führungsbuchse 318 aufgeschoben werden kann.

Weiter ist zu Figur 7 noch nachzutragen, daß bei beginnendem Anheben des Aufwerfhebels 326 zunächst der Sicherungsbolzen 345 zuerst nach links zurückgeht und später erst der Sicherungsbolzen 329 durch den Aufwerfhebel nach links zurückgedrückt wird. Dies kommt in der Figur 7 zeichnerisch nicht hinreichend zum Ausdruck. Es ist aber auch eine umgekehrte Reihenfolge grundsätzlich zulässig. Erst wenn beide Sicherungsbolzen 345 und 329 jeweils gegen Federkraft verschoben sind, kann der Aufwerfhebel 326 den Kupplungsbolzen 329 nach oben mitnehmen.

Bei der Ausführungsform nach der Figur 7 wird man den Abstand der Gabelteile möglichst groß machen, um eine möglichst große Buchsenlänge der Führungsbuchse zu erhalten.

## Patentansprüche

1. Anhängerkupplung umfassend einen Kupplungskörper (10) und einen relativ zu diesem Kupplungskörper (10) zwischen einer Kupplungsstellung (Fig. 1) und einer Lösestellung (Fig. 4) beweglichen Kupplungsbolzen (19), eine an dem Kupplungskörper (10) angebrachte Bolzenführung (17) für den Kupplungsbolzen (19), eine auf dem Kupplungskörper (10) angebrachte Stellmechanik (21) zur Verstellung des Kupplungsbolzens (19) zwischen der Kupplungsstellung (Fig. 1) und der Lösestellung (Fig. 4), Sicherungsmittel (28) zum Sichern des Kupplungsbolzens (19) in der Kupplungsstellung (Fig. 1) und ein auf dem Kupplungskörper befestigtes Gehäuse (22), welches die Stellmechanik (21) und die Sicherungsmittel (28) wenigstens teilweise einschließt,
dadurch gekennzeichnet,
daß die Bolzenführung (17) an einem von dem Gehäuse (22) gesonderten Führungselement (17) angebracht ist und daß die Sicherungsmittel (28) wenigstens z. T. zwischen dem Führungselement (17) und dem Kupplungsbolzen (19) wirksam sind.

2. Anhängerkupplung nach Anspruch 1,
dadurch gekennzeichnet,
daß die Sicherungsmittel wenigstens ein Sicherungselement (29) umfassen, welches an dem Führungselement (17) zwischen einer Sicherungsstellung und einer Freigabestellung geführt ist.

3. Anhängerkupplung nach Anspruch 2,
dadurch gekennzeichnet,
daß das Sicherungselement (29) von einem Sicherungsbolzen (29) gebildet ist, welcher an dem Führungselement (17) in einer Richtung quer zur Führungsrichtung (Kₓ) des Kupplungsbolzens(19)verschiebbar geführt ist.

4. Anhängerkupplung nach einem der Ansprüche 2 und 3,
dadurch gekennzeichnet,
daß das wenigstens eine Sicherungselement (29) durch ein Teil (26) der Betätigungsmechanik (21) gegen die Kraft einer Sicherungselementen-Vorspanneinrichtung (27) aus der Sicherungsstellung in die Freigabestellung überführbar ist, und zwar vor oder in einer Anfangsphase der Bewegung des Kupplungsbolzens (19) aus seiner Kupplungsstellung (Fig. 1) in seine Lösestellung (Fig. 4).

5. Anhängerkupplung nach Anspruch 4,
dadurch gekennzeichnet,
daß das Sicherungselement durch einen Aufwerfhebel (26) der Betätigungsmechanik (21) aus der Sicherungsstellung in die Freigabestellung überführbar ist, welcher Aufwerfhebel (26) zur Mitnahme des Kupplungsbolzens (19) aus der Kupplungsstellung (Fig. 1) in die Lösestellung (Fig. 4) angeordnet und ausgebildet ist.

6. Anhängerkupplung nach Anspruch 5,
dadurch gekennzeichnet,
daß der Aufwerfhebel (26) in eine Ausnehmung (19a) des Kupplungsbolzens eingreift, welche von einem durch den Aufwerfhebel (26) beaufschlagbaren Mitnahmeelement (34) wenigstens teilweise übergriffen ist, daß das Sicherungselement (29) in diese Ausnehmung (19a) eingreift und daß an dem Sicherungselement (29) und dem Aufwerfhebel (26) zusammenwirkende Nockenmittel (32,33) vorgesehen sind, welche beim Übergang des Aufwerfhebels (26) aus einer der Kupplungsstellung (Fig. 1) des Kupplungsbolzens (19) entsprechenden Ruhestellung in eine dem Angriff des Aufwerfhebels (26) an dem Mitnahmeelement (34) entsprechende Mitnahme-Einleitungsstellung in Wechselwirkung treten und das Sicherungselement (29) wenigstens teilweise aus der Sicherungsstellung in die Freigabestellung überführen.

7. Anhängerkupplung nach einem der Ansprüche 5 und 6,
dadurch gekennzeichnet,
daß der Aufwerfhebel (26) in seiner Ruhestellung als ein zusätzliches Sicherungselement (bei 26a) zur Sicherung des Kupplungsbolzens (19) in seiner Kupplungsstellung (Fig. 1) wirksam ist.

8. Anhängerkupplung nach Anspruch 7,
dadurch gekennzeichnet,
daß der Aufwerfhebel (26) in seiner Ruhestellung durch Selbstsperrung (26a-19a1) oder durch Formschluß (26a-19a2) mit dem Kupplungsbolzen (19) zusammenwirkt.

9. Anhängerkupplung nach Anspruch 7 oder 8,
dadurch gekennzeichnet,
daß der Aufwerfhebel (26) an dem Kupplungsgehäuse (22) gelagert ist.

10. Anhängerkupplung nach einem der Ansprüche 7 - 9,
dadurch gekennzeichnet,
daß der Aufwerfhebel (26) bei Übergang von seiner Ruhestellung in Richtung auf seine Mitnahme-Einleitungsstellung seine Sicherungsfunktion verliert, bevor das Sicherungselement (29) seine Sicherungsstellung verläßt.

11. Anhängerkupplung nach einem der Ansprüche 1 - 10,
dadurch gekennzeichnet,
daß das Führungselement (17) als eine Führungshülse (17) ausgebildet ist, in welcher der Kupplungsbolzen (19) geführt ist.

12. Anhängerkupplung nach Anspruch 11,
dadurch gekennzeichnet,
daß die Führungshülse einen Schlitz aufweist und daß ein Aufwerfhebel (26) der Betätigungsmechanik (21) durch diesen Schlitz hindurch mit dem Kupplungsbolzen (19) zusammenwirkt.

13. Anhängerkupplung nach einem der Ansprüche 1 - 12,
dadurch gekennzeichnet,
daß die Sicherungsmittel (28) wenigstens z. T. in einem Fußteil (17a) des Führungselements (17) gelagert sind, welcher der Befestigung des Führungselements (17) an dem Kupplungskörper (10) dient.

14. Anhängerkupplung nach Anspruch 13,
dadurch gekennzeichnet,
daß bei gabelförmiger Ausbildung des Kupplungskörpers (10) mit einem oberen Gabelteil (16) und einem unteren Gabelteil (15) der Fußteil (17a) des Führungselements (17) auf der Oberseite des oberen Gabelteils (16) befestigt ist.

15. Anhängerkupplung nach einem der Ansprüche 1 - 12,
dadurch gekennzeichnet,
daß bei gabelförmiger Ausbildung des Kupplungskörpers (110) mit einem oberen Gabelteil (116) und einem unteren Gabelteil (115) das Führungselement (117) mit einem integral angeformten Stützelement (117d) ausgeführt ist, welches in der Betriebsstellung des Führungselements (117) an der Unterseite des oberen Gabelteils (116) abgestützt ist.

16. Anhängerkupplung nach Anspruch 15,
dadurch gekennzeichnet,
daß das Führungselement (117) als eine Führungshülse mit einem ringförmigen Stützelement (117d) ausgeführt ist.

17. Anhängerkupplung nach Anspruch 15 oder 16,
dadurch gekennzeichnet,
daß das Führungselement in seiner Betriebsstellung an dem oberen Gabelteil (116) durch Haltemittel (117e) gegen Abwärtsbewegung gesichert ist.

18. Anhängerkupplung nach einem der Ansprüche 2 - 17,
dadurch gekennzeichnet,
daß die Sicherungsmittel (228) zwei Sicherungselemente (229,229') umfassen, welche an dem Führungselement (217) geführt sind.

19. Anhängerkupplung nach Anspruch 18,
dadurch gekennzeichnet,
daß die beiden Sicherungselemente einander in einer Richtung gegenüberstehen, welche im wesentlichen orthogonal zu einer durch die Längsachse (Aₓ) des Kupplungskörpers und durch die Führungsrichtung (Kₓ) des Kupplungsbolzens definierten Längsmittelebene des Kupplungskörpers (219) steht.

20. Anhängerkupplung nach einem der Ansprüche 18 und 19,
dadurch gekennzeichnet,
daß die beiden Sicherungselemente (229,229') von je einem Sicherungsbolzen (229,229') gebildet sind, welcher an dem Führungselement (217) verschiebbar geführt ist.

21. Anhängerkupplung nach einem der Ansprüche 18 - 20,
dadurch gekennzeichnet,
daß die beiden Sicherungselemente (229,229') durch Nockenmittel (232,232') aus der jeweiligen Sicherungsstellung in eine Freigabestellung überführbar sind, welche einerseits an einem Aufwerfhebel (226) und andererseits an den beiden Sicherungselementen (229,229') angebracht sind.

22. Anhängerkupplung nach einem der Ansprüche 18 - 21,
dadurch gekennzeichnet,
daß ein die Überführung des Kupplungsbolzens (219) aus dessen Kupplungsstellung in dessen Lösestellung bewirkender Aufwerfhebel (226) an dem Gehäuse (222) gelagert und von einer auf unmittelbarem Zusammenwirken mit dem Kupplungsbolzen (219) beruhenden Sicherungsfunktion freigestellt ist.

23. Anhängerkupplung nach einem der Ansprüche 1 - 22,
dadurch gekennzeichnet,
daß die Sicherungsmittel mindestens ein Sicherungselement (228) umfassen, welches mit einem an der Außenseite der Anhängerkupplung erkennbaren Anzeigeelement (229'a) zur gemeinsamen Bewegung verbunden ist.

24. Anhängerkupplung nach Anspruch 23,
dadurch gekennzeichnet,
daß das Anzeigeelement (229'a) von dem Ende eines Sicherungsbolzens (229') gebildet ist, welcher in dem Führungselement (217) geführt ist.

25. Anhängerkupplung nach einem der Ansprüche 1 - 24,
dadurch gekennzeichnet,
daß die Sicherungsmittel (328) mindestens ein kupplungsbolzenseitiges Sicherungselement (345) umfassen, welches an dem Kupplungsbolzen (319) beweglich gelagert ist und mit einem Widerlager (354) an dem Führungselement (317) zusammenwirkt.

26. Anhängerkupplung nach Anspruch 25,
dadurch gekennzeichnet,
daß bei Ausbildung des Führungselements (317) als Führungshülse und Führung des Kupplungsbolzens (319) in einem Führungskanal dieser Führungshülse (317) das kupplungsbolzenseitige Sicherungselement (345) gegen die Wirkung von Vorspannmitteln durch ein Teil der Betätigungsmechanik (321) in eine Freigabeposition innerhalb des Umrisses des Kupplungsbolzens (319) vorgespannt ist und durch die Vorspannmittel in eine Sicherungsstellung überführbar ist, in welcher es mit dem Widerlager (354) der Führungshülse (317) zusammenwirkt, wobei die Sicherungsstellung dann auftritt, wenn der Kupplungsbolzen (319) seiner Kupplungsstellung und die Betätigungsmechanik (321) einer der Kupplungsstellung des Kupplungsbolzens (319) entsprechenden Ruhestellung angenähert sind.

27. Anhängerkupplung nach einem der Ansprüche 25 und 26,
dadurch gekennzeichnet,
daß das kupplungsbolzenseitige Sicherungselement (345) von einem innerhalb des Kupplungsbolzens (319) verschiebbar geführten Sicherungsbolzen (345) gebildet ist.

28. Anhängerkupplung nach Anspruch 27,
dadurch gekennzeichnet,
daß der Sicherungsbolzen (345) im wesentlichen radial zu einer Achse (Kₓ) des Kupplungsbolzens (319) in dem Kupplungsbolzen (319) geführt ist.

29. Anhängerkupplung nach einem der Ansprüche 26 - 28,
dadurch gekennzeichnet,
daß das Widerlager (354) von einem Durchgang (354) der Führungshülse (317) gebildet ist.

30. Anhängerkupplung nach einem der Ansprüche 25 - 29,
dadurch gekennzeichnet,
daß das kupplungsbolzenseitige Sicherungselement (345) durch einen Aufwerfhebel (326) steuerbar ist, welcher der Überführung des Kupplungsbolzens (319) aus seiner Kupplungsstellung (Fig. 1) in seine Lösestellung (Fig. 4) dient.

31. Anhängerkupplung nach einem der Ansprüche 1 - 30,
dadurch gekennzeichnet,
daß das Führungselement (17) innerhalb des Gehäuses (22) im wesentlichen eingeschlossen ist.

32. Anhängerkupplung nach einem der Ansprüche 1 - 31,
dadurch gekennzeichnet,
daß das Gehäuse (22) und das Führungselement (17) durch gesonderte Befestigungsmittel (18 bzw. 23) an dem Kupplungskörper (10) befestigt sind.

33. Anhängerkupplung nach einem der Ansprüche 1 - 32,
dadurch gekennzeichnet,
daß mindestens ein Sicherungselement (626a) mit einem Anzeigeelement (666,667) zur gemeinsamen Bewegung verbunden ist, welches durch das Gehäuse (622) hindurch zu einer Beobachtungsstelle geführt ist.

34. Anhängerkupplung nach einem der Ansprüche 2 - 33,
dadurch gekennzeichnet,
daß ein an einem Führungselement (17) beweglich gelagertes Sicherungselement (19) durch Vorspannmittel (30) in eine Sicherungsstellung vorgespannt ist, welche an dem Gehäuse (22) abgestützt und ggf. innerhalb dieses Gehäuses (22) untergebracht sind, wobei vom Kupplungsbolzen (19) herrührend Belastungen auf das Sicherungselement (29) von dem Gehäuse (22) im wesentlichen entkoppelt sind.

35. Anhängerkupplung nach einem der Ansprüche 1 - 34
ferner umfassend ein um eine Schwenkachse parallel oder zusammenfallend mit einer Führungsachse (Kₓ) des Kupplungsbolzens (19) schwenkbares Kupplungsmaul (39) mit Sperrmitteln (41) zum Sperren des Kupplungsmauls (39) gegen Drehung um die Schwenkachse, wobei diese Sperrmittel (41) das Kupplungsmaul (39) in einer mittleren Stellung dann sperren, wenn sich der Kupplungsbolzen in Lösestellung (Fig. 4) befindet und dann entsperren, wenn sich der Kupplungsbolzen (19) in Kupplungsstellung (Fig. 1) befindet, und wobei diese Sperrmittel durch die Betätigungsmechanik (21) zwischen einer Sperrstellung (Fig. 4), in welcher sie das Kupplungsmaul (39) sperren, und einer Entsperrungsstellung (Fig. 1), in welcher sie das Kupplungsmaul (39) entsperren (Fig. 1), verstellbar sind,
dadurch gekennzeichnet,
daß die Sperrmittel (41) derart zwischen dem Kupplungskörper (10) und dem Kupplungsmaul (39) angeordnet sind, daß keine wesentlichen von einer Einwirkung einer Deichsel auf das Kupplungsmaul (39) herrührenden Kräfte auf die Betätigungsmittel (21) übertragen werden.

36. Anhängerkupplung nach Anspruch 35,
dadurch gekennzeichnet,
daß die Sperrmittel (41) ein in dem Kupplungskörper (10) geführtes Sperrglied (41a) umfassen, welches mit einer Sperrgliedaufnahme (41c) des Kupplungsmauls (39) in Sperreingriff tritt.

37. Anhängerkupplung nach einem der Ansprüche 1 - 36,
ferner umfassend ein um eine Schwenkachse parallel oder zusammenfallend mit einer Führungsachse (Kₓ) des Kupplungsbolzens (19) schwenkbares Kupplungsmaul (39) mit Sperrmitteln zum Sperren des Kupplungsmauls (39) gegen Drehung um seine Schwenkachse, wobei diese Sperrmittel (41) das Kupplungsmaul (39) in einer mittleren Stellung dann sperren, wenn sich der Kupplungsbolzen (19) in Lösestellung (Fig. 4) befindet und dann entsperren, wenn sich der Kupplungsbolzen (19) in Kupplungsstellung (Fig. 1) befindet, und wobei diese Sperrmittel (41) durch die Betätigungsmechanik (21) zwischen einer Sperrstellung (Fig. 4), in welcher sie das Kupplungsmaul (39) sperren, und einer Entsperrungsstellung (Fig. 1), in welcher sie das Kupplungsmaul (39) entsperren, verstellbar sind,
dadurch gekennzeichnet,
daß die Sperrmittel (41) ein in einer kupplungskörperfesten Sperrgliedführung (41b) geführtes Sperrglied (41a) und eine Sperr-Rast (41c) an dem Kupplungsmaul (39) umfassen, daß zwischen einem Teil (26) der Betätigungsmechanik (21) und dem Sperrglied (41a) eine Kurven-Kurvenfolger-Verbindung (41d,41e) besteht, um das Sperrglied (41a) zwischen einer Entsperrungsstellung (Fig. 1) und einer Sperrstellung (Fig. 4) gegenüber der Sperr-Rast (41c) zu verstellen in Abhängigkeit von der Stellung des Kupplungsbolzens (19), und daß die Kurven-Kurvenfolger-Verbindung (41d,41e) derart ausgebildet ist, daß bei Außerfluchtstellung zwischen dem Sperrglied (41a) und der Sperr-Rast (41c) eine elastische Deformation (bei 41f) in der Kurven-Kurvenfolger-Verbindung (41d,41e) eintritt, wenn sich das Sperrglied an seine Sperrstellung nähert.

38. Anhängerkupplung nach Anspruch 37,
dadurch gekennzeichnet,
daß die Kurven-Kurvenfolger-Verbindung (41d,41e) einen Kurvenfolger (41e) umfaßt, welcher an dem Sperrglied (41a) elastisch (bei 41f) abgestützt ist.

39. Anhängerkupplung nach Anspruch 38,
dadurch gekennzeichnet,
daß der Kurvenfolger (41e) durch eine Schraubenkompressionsfeder (41f) gestützt ist, welche in einer Bohrung (41g) des Sperrglieds (41a) aufgenommen ist.

40. Anhängerkupplung nach einem der Ansprüche 37 - 39,
dadurch gekennzeichnet,
daß die Kurven-Kurvenfolger-Verbindung (41d,41e) ein Doppelkurvensystem (41d,41i) an dem jeweiligen Teil (26) des Betätigungssystems (21) umfaßt, wobei eine erste Kurve (41d) des Doppelkurvensystems (41d,41i) mit einem ersten am Sperrglied (41a) elastisch abgestützten Kurvenfolger (41e) und eine zweite Kurve (41i) des Doppelkurvensystems (41d,41i) mit einem am Sperrglied (41a) starr angebrachten zweiten Kurvenfolger (41j) zusammenwirken und wobei dieser zweite Kurvenfolger (41j) von der zweiten Kurve (41i) abheben kann, wenn das Sperrglied (41a) infolge Außerfluchtstellung zu der Sperr-Rast (41c) nicht in seine Sperrstellung übergehen kann, das Doppelkurvensystem (41d,41i) aber zufolge einer Bewegung der Betätigungsmechanik (21) dennoch eine Relativbewegung gegenüber dem Sperrglied (41a) ausführt.

41. Anhängerkupplung nach einem der Ansprüche 1 - 40,
wobei die Stellmechanik (621) einen mit einem Mitnahmeelement (634) des Kupplungsbolzens (619) und ggf. mit den Sicherungsmitteln (629) zusammenwirkenden Aufwerfhebel (626) umfaßt,
dadurch gekennzeichnet,
daß dieser Aufwerfhebel (626) aus einer Mehrzahl von mindestens zwei Teilhebeln (626I,626II,626III) zusammengesetzt ist.

42. Anhängerkupplung nach Anspruch 41,
dadurch gekennzeichnet,
daß unterschiedliche Funktionsteile (626a,626f,626b, 666,664) des Aufwerfhebels an verschiedenen Teilhebeln angebracht sind.

43. Anhängerkupplung nach Anspruch 41 oder 42,
dadurch gekennzeichnet,
daß die Teilhebel (626I,626II,626III) aus Flachmaterial ausgeschnitten sind.

44. Anhängerkupplung nach Anspruch 41 oder 42,
dadurch gekennzeichnet,
daß die Teilhebel(626I,626II,626III) als Sinterteile hergestellt sind.

45. Anhängerkupplung nach einem der Ansprüchen 41 - 44,
dadurch gekennzeichnet,
daß die Teilhebel (626I,626II,626III) aneinander befestigt sind, z. B. durch Schweißen oder Kleben.

46. Anhängerkupplung nach einem der Ansprüche 41 - 45,
dadurch gekennzeichnet,
daß die Teilhebel (626I,626II,626III) mit Mehrkantöffnungen (670) versehen sind, welche auf einer Betätigunswelle (625) mit Mehrkantprofil unverdrehbar gelagert sind.

47. Anhängerkupplung nach einem der Ansprüche 1 - 46,
dadurch gekennzeichnet,
daß gegenüber dem oberen Ende des Kupplungsbolzens (19) eine Feder (35) vorgesehen ist, welche den Kupplungsbolzen (19) in Raststellung gegenüber einem Aufwerfhebel (26) der Betätigungsmechanik (21) hält, wobei der Kupplungsbolzen (19) dann gegenüber der Bolzenführung (17) eine der betriebsmäßigen Lösestellung (Fig. 4) entsprechende Stellung einnimmt.

48. Anhängerkupplung nach einem der Ansprüche 1 - 47,
dadurch gekennzeichnet,
daß das Gehäuse (22) in Leichtbauweise hergestellt ist, insbesondere aus Leichtmetall oder aus Kunststoff.

49. Anhängerkupplung nach einem der Ansprüche 1 - 48,
dadurch gekennzeichnet,
daß der Kupplungsbolzen (19) in der Lösestellung in den Einführungsweg einer Zugöse (20) hineinragt und durch Anheben mittels der Zugöse (20) von ihn in der Lösestellung (Fig. 4) gegen Federvorspannung sichernden Haltemitteln (19a2,34) lösbar ist.

50. Verfahren zur Herstellung eines Aufwerfhebels (626) für eine Anhängerkupplung nach einem der Ansprüche 41 - 49,
wobei dieser Aufwerfhebel (626) eine Mehrzahl von Eingriffsstellen (626a,626f,626c,666,664) zum Zusammenwirken mit Funktionsteilen der Anhängerkupplung aufweist,
dadurch gekennzeichnet,
daß der Aufwerfhebel (626) aus einer Mehrzahl von platinenförmigen Teilhebeln (626I,626II,626III) sandwichartig zusammengesetzt wird.

51. Verfahren nach Anspruch 50,
dadurch gekennzeichnet,
daß die Teilhebel (626I,626II,626III) aus Blechmaterial ausgeschnitten werden, insbesondere durch Stanzen und/oder Laserstrahlschneiden und/oder Elektronenstrahlschneiden und/oder Wasserstrahlschneiden.

52. Verfahren nach Anspruch 50 oder 51,
dadurch gekennzeichnet,
daß die Teilhebel (626I,626II,626III) zumindest an den Eingriffsstellen (626a,626f,626c,666,664) durch Wärmeentwicklung während des Schneidvorgangs thermisch vergütet werden, insbesondere gehärtet.

53. Verfahren nach einem der Ansprüchen 50 - 52,
dadurch gekennzeichnet,
daß die Teilhebel (626I,626II,626III) mit Kanten geschnitten werden, die im wesentlichen senkrecht zur jeweiligen Platinenebene stehen.

54. Verfahren nach einem der Anspüche 50 - 53,
dadurch gekennzeichnet,
daß unterschiedliche Eingriffsstellen (626a,626f,626c, 666,664) wenigstens z. T. an unterschiedlichen Teilhebeln (626I,626II,626III) angeformt werden.

55. Verfahren nach einem der Ansprüche 50 - 54,
dadurch gekennzeichnet,
daß die Teilhebel (626I,626II,626III) aneinander befestigt werden, z. B. durch Schweißen, Kleben oder Nieten.

56. Verfahren nach einem der Ansprüche 50 - 55,
dadurch gekennzeichnet,
daß die Teilhebel (626I,626II,626III) mit Lageröffnungen (670) versehen werden, welche der Verbindung mit einer Betätigungswelle (625) entsprechenden Querschnitts dienen.

57. Verfahren nach Anspruch 56,
dadurch gekennzeichnet,
daß die Teilhebel (626I,626II,626III) mit polygonalen Lageröffnungen (670) versehen werden.

## Claims

1. A trailer coupling, comprising a coupling body (10) and a coupling pin (19) movable in relation to said coupling body (10) between a coupling position (fig. 1) and a release position (fig. 4), a pin guide (17) for said coupling pin (19) mounted on said coupling body (10), an actuating mechanism (21) mounted on said coupling body (10) for displacing said coupling pin (19) between said coupling position (fig. 1) and said release position (fig. 4), securing means (28) for securing said coupling pin (19) in said coupling position (fig. 1) and a housing (22) fastened to said coupling body and at least partly enclosing said actuating mechanism (21) and said securing means (28), **characterized in that** said pin guide (17) is mounted on a guide member (17) separate from said housing (22) and in that said securing means (28) are effective at least partly between said guide member (17) and said coupling pin (19).

2. A trailer coupling according to claim 1, characterized in that said securing means comprise at least one securing member (29) guided on said guide member (17) between a securing position and an enable position.

3. A trailer coupling according to claim 2, characterized in that said securing member (29) is constituted of a securing pin (29) slidably guided on said guide member (17) in a direction transverse to the guide direction (Kₓ) of said coupling pin (19).

4. A trailer coupling according to one of claims 2 and 3, characterized in that said at least one securing member is displaceable by a member (26) of said actuating mechanism (21) against the force of a securing member pretensioning means (27) from said securing position into said enable position, namely prior to or during an initial stage of the movement of said coupling pin (19) from its coupling position (fig. 1) into its release position (fig. 4).

5. A trailer coupling according to claim 4, characterized in that said securing member is displaceable by a lifting lever (26) of said actuating mechanism (21) from said securing position into said enable position, said lifting lever (26) being arranged to drive said coupling pin (19) from said coupling position (fig. 1) into said release position (fig. 4).

6. A trailer coupling according to claim 5, characterized in that said lifting lever (26) engages a recess (19a) of said coupling pin, said recess (19a) being overlapped at least partly by a drive member (34) engageable by said lifting lever (26), in that said securing member (29) engages said recess (19a) and in that cam means (32, 33) are provided in a cooperating manner on said securing member (29) and said lifting lever (26),
wherein said cam means (32, 33) start interacting when said lifting lever (26) moves from a rest position corresponding to said coupling position (fig. 1) of said coupling pin (19) into a drive initiating position corresponding to the engagement of said lifting lever (26) with said drive member (34), and move said securing member (29) at least partly from said securing position toward said enable position.

7. A trailer coupling according to one of claims 5 and 6, characterized in that said lifting lever (26), in its rest position, is effective as an additional securing member (at 26a) for securing said coupling pin (19) in its coupling position (fig. 1).

8. A trailer coupling according to claim 7, characterized in that said lifting lever (26), in its rest position, self-lockingly (26a-19a1) or positively (26a-19a2) cooperates with said coupling pin (19).

9. A trailer coupling according to claim 7 or 8, characterized in that said lifting lever (26) is supported on said coupling housing (22).

10. A trailer coupling according to one of claims 7-9, characterized in that said lifting lever (26), when moving from its rest position toward its drive initiating position, loses its securing function prior to said securing member (29) leaving its securing position.

11. A trailer coupling according to one of claims 1-10, characterized in that said guide member (17) is designed as a guide sleeve (17), said coupling pin (19) being guided in said guide sleeve (17).

12. A trailer coupling according to claim 11, characterized in that said guide sleeve includes a slot and in that a lifting lever (26) of said actuating mechanism (21) cooperates with said coupling pin (19) through said slot.

13. A trailer coupling according to one of claims 1-12, characterized in that said securing means (28) are supported at least partly in a foot portion (17a) of said guide member (17), said foot portion (17a) serving to fasten said guide member (17) to said coupling body (10).

14. A trailer coupling according to claim 13, characterized in that said coupling body (10) is designed as a fork and includes an upper fork portion (16) and a lower fork portion (15), said foot portion (17a) of said guide member (17) being fastened to the top of said upper fork portion (16).

15. A trailer coupling according to one of claims 1-12, characterized in that said coupling body (110) is designed as a fork and includes an upper fork portion (116) and a lower fork portion (115), said guide member (117) being designed with a support member (117d) integrally formed with said guide member (117), said support member (117d), in the operating position of said guide member (117), being supported on the bottom side of said upper fork portion (116).

16. A trailer coupling according to claim 15, characterized in that said guide member (117) is designed as a guide sleeve having an annular support member (117d).

17. A trailer coupling according to claim 15 or 16, characterized in that said guide member, in its operating position, is secured on the upper fork portion (116) against downward movement by retaining means (117e).

18. A trailer coupling according to one of claims 2-17, characterized in that said securing means (228) comprise two securing members (229, 229') guided on said guide member (217).

19. A trailer coupling according to claim 18, characterized in that both said securing members are opposite to each other in a direction substantially orthogonal to a longitudinal central plane of said coupling body (219), said longitudinal central plane being defined by the longitudinal axis (Aₓ) of said coupling body and by the guide direction (Kₓ) of said coupling pin.

20. A trailer coupling according to one of claims 18 and 19, characterized in that both said securing members (229, 229') each are constituted of a securing pin (229, 229') slidably guided on said guide member (217).

21. A trailer coupling according to one of claims 18-20, characterized in that both said securing members (229, 229') are movable from the respective securing position into an enable position by cam means (232, 232') mounted on the one hand on a lifting lever (226) and on the other hand on both said securing members (229, 229').

22. A trailer coupling according to one of claims 18-21, characterized in that a lifting lever (226) effecting movement of said coupling pin (229) from its coupling position into its release position is supported on said housing (222) and is free of a securing function which is based on direct cooperation with said coupling pin (219).

23. A trailer coupling according to one of claims 1-22, characterized in that said securing means comprise at least one securing member (228) connected with an indicating member (229'a) for common movement, said indicating member (229'a) being visible at the outside of the trailer coupling.

24. A trailer coupling according to claim 23, characterized in that said indicating member (229'a) is constituted of the extremety of a securing pin (229') which securing pin (229') is guided in said guide member (217).

25. A trailer coupling according to one of claims 1-24, characterized in that said securing means (328) comprise at least one coupling pin side securing member (345) movably supported on said coupling pin (319) and cooperating with an abutment (354) on said guide member (317).

26. A trailer coupling according to claim 25, characterized in that said coupling pin side securing member (345), if said guide member (317) is designed as a guide sleeve and said coupling pin (319) is guided in a guide channel of said guide sleeve (317), is pretensioned by a member of said actuating mechanism (321) into an enable position within the contour of said coupling pin (319) against the action of pretensioning means and is movable into a securing position by said pretensioning means, said coupling pin side securing member (345) cooperating with said abutment (354) of said guide sleeve (317) in said securing position, said securing position occurring when said coupling pin (319) has approached its coupling position and said actuating mechanism (321) has approached a rest position corresponding to said coupling position of said coupling pin (319).

27. A trailer coupling according to one of claims 25 and 26, characterized in that said coupling pin side securing member (345) is constituted of a securing pin (345) slidably guided in said coupling pin (319).

28. A trailer coupling according to claim 27, characterized in that said securing pin (345) is guided in said coupling pin (319) in substantially radial relation to an axis (Kₓ) of said coupling pin (319).

29. A trailer coupling according to one of claims 26-28, characterized in that said abutment (354) is constituted of a passage (354) of said guide sleeve (317).

30. A trailer coupling according to one of claims 25-29, characterized in that said coupling pin side securing member (345) is controllable by a lifting lever (326) which serves to move said coupling pin (319) from its coupling position (fig. 1) into its release position (fig. 4).

31. A trailer coupling according to one of claims 1-30, characterized in that said guide member (17) is substantially enclosed within said housing (22).

32. A trailer coupling according to one of claims 1-31, characterized in that said housing (22) and said guide member (17) are fastened to said coupling body (10) by separate fastening means (18 and 23, resp.).

33. A trailer coupling according to one of claims 1-32, characterized in that said at least one securing member (626a) is connected with an indicating member (666, 667) for common movement, said indicating member (666, 667) extending through said housing (622) to an observation location.

34. A trailer coupling according to one of claims 2-33, characterized in that a securing member (19) movably supported on a guide member (17) is pretensioned into a securing position by pretensioning means (30), said pretensioning means (30) being supported on said housing (22) and optionally accommodated within said housing (22), stresses generated by said coupling pin (19) and acting on said securing member (29) being substantially decoupled from said housing (22).

35. A trailer coupling according to one of claims 1-34, further comprising a coupling mouth (39) pivotable about a pivot axis parallel or coincident with a guide axis (Kₓ) of said coupling pin (19), said coupling mouth (39) including locking means (41) for locking said coupling mouth (39) against rotation about said pivot axis, said locking means (41) locking said coupling mouth (39) in an intermediate position when said coupling pin is in said release position (fig. 4) and unlocking said coupling mouth (39) when said coupling pin (19) is in said coupling position (fig. 1), said locking means being displaceable by said actuating mechanism (21) between a locking position (fig. 4) in which they lock said coupling mouth (39) and an unlocking position (fig. 1) in which they unlock (fig. 1) said coupling mouth (39),
characterized in that said locking means (41) are arranged between said coupling body (10) and said coupling mouth (39) such that no substantial forces generated by a draw bar acting on said coupling mouth (39) are transmitted to said actuating means (21).

36. A trailer coupling according to claim 35, characterized in that said locking means (41) comprise a locking member (41a) guided in said coupling body (10), said locking member (41a) coming into locking engagement with a locking member receiving portion (41c) of said coupling mouth (39).

37. A trailer coupling according to one of claims 1-36, further comprising a coupling mouth (39) pivotable about a pivot axis parallel or coincident with a guide axis (Kₓ) of said coupling pin (19), said coupling mouth (39) including locking means for locking said coupling mouth (39) against rotation about its pivot axis, said locking means (41) locking said coupling mouth (39) in an intermediate position when said coupling pin (19) is in said release position (fig. 4) and unlocking said coupling mouth (39) when said coupling pin (19) is in said coupling position (fig. 1), said locking means (41) being displaceable by said actuating mechanism (21) between a locking position (fig. 4) in which they lock said coupling mouth (39) and an unlocking position (fig. 1) in which they unlock said coupling mouth (39),
characterized in that said locking means (41) comprise a locking member (41a) guided in a locking member guide (41b) fixed to said coupling body and a locking catch (41c) on said coupling mouth (39), in that there is a curve and curve follower connection (41d, 41e) between a member (26) of said actuating mechanism (21) and said locking member (41a) in order to displace said locking member (41a) with respect to said locking catch (41c) between an unlocking position (fig. 1) and a locking position (fig. 4) in dependence on the position of said coupling pin (19), and in that said curve and curve follower connection (41d, 41e) is designed such that an elastic deformation (at 41f) occurs in said curve and curve follower connection (41d, 41e) when said locking member (41a) and said locking catch (41c) are in a position of non-alignment with respect to each other and when said locking member approaches its locking position.

38. A trailer coupling according to claim 37, characterized in that said curve and curve follower connection (41d, 41e) comprises a curve follower (41e) resiliently supported (at 41f) on said locking member (41a).

39. A trailer coupling according to claim 38, characterized in that said curve follower (41e) is supported by a helicoidal compression spring (41f) accommodated in a bore (41g) of said locking member (41a).

40. A trailer coupling according to one of claims 37-39, characterized in that said curve and curve follower connection (41d, 41e) comprises a double curve system (41d, 41i) on the respective member (26) of said actuating system (21), a first curve (41d) of said double curve system (41d, 41i) cooperating with a first curve follower (41e) resiliently supported on said locking member (41a) and a second curve (41i) of said double curve system (41d, 41i) cooperating with a second curve follower (41j) rigidly mounted on said locking member (41a), said second curve follower (41j) being allowed to lift off said second curve (41i) when said locking member (41a) due to a position of non-alignment with respect to said locking catch (41c) cannot move into its locking position, but nevertheless said double curve system (41d, 41i) due to a movement of said actuating mechanism (21) performs a relative movement with respect to said locking member (41a).

41. A trailer coupling according to one of claims 1-40, wherein said actuating mechanism (621) comprises a lifting lever (626) cooperating with a drive member (634) of said coupling pin (619) and optionally cooperating with said securing means (629),
characterized in that said lifting lever (626) is composed of a plurality of at least two part levers (626I, 626II, 626III).

42. A trailer coupling according to claim 41, characterized in that distinct functional parts (626a, 626f, 626b, 666, 664) of said lifting lever are arranged on different part levers.

43. A trailer coupling according to claim 41 or 42, characterized in that said part levers (626I, 626II, 626III) are cut out of a sheet material.

44. A trailer coupling according to claim 41 or 42, characterized in that said part levers (626I, 626II, 626III) are sintered components.

45. A trailer coupling according to one of claims 41-44, characterized in that said part levers (626I, 626II, 626III) are fixed to each other, for instance by welding or gluing.

46. A trailer coupling according to one of claims 41-45, characterized in that said part levers (626I, 626II, 626III) are provided with polygonal openings (670) non-rotatably mounted on an actuating shaft (625) having a polygonal profile.

47. A trailer coupling according to one of claims 1-46, characterized in that there is provided a spring (35) opposite to the upper extremity of said coupling pin (19), said spring (35) retaining said coupling pin (19) in a catch position with respect to a lifting lever (26) of said actuating mechanism (21), said coupling pin (19) then being in a position with respect to said pin guide (17) which corresponds to the operational release position (fig. 4).

48. A trailer coupling according to one of claims 1-47, characterized in that said housing (22) is made as a lightweight construction, especially of light metal or plastics material.

49. A trailer coupling according to one of claims 1-48, characterized in that said coupling pin (19), in said release position, extends into the introduction path of a draw eye (20) and is releasable - by lifting by means of said draw eye (20) - from retaining means (19a2, 34) which secure said coupling pin (19) in said release position (fig. 4) against resilient pretension.

50. A method of producing a lifting lever (626) for a trailer coupling according to one of claims 41-49, wherein said lifting lever (626) includes a plurality of engagement locations (626a, 626f, 626c, 666, 664) for cooperation with functional parts of said trailer coupling,
characterized in that said lifting lever (626) is assembled in a sandwich like manner of a plurality of plate-shaped part levers (626I, 626II, 626III).

51. A method according to claim 50, characterized in that said part levers (626I, 626II, 626III) are cut out of sheet metal, especially by punching and/or laser beam cutting and/or electronic beam cutting and/or water jet cutting.

52. A method according to claim 50 or 51, characterized in that said part levers (626I, 626II, 626III) are thermally improved, especially hardened, at least at the engagement locations (626a, 626f, 626c, 666, 664) by heat development during the cutting process.

53. A method according to one of claims 50-52, characterized in that said part levers (626I, 626II, 626III) are cut with edges substantially orthogonal to the respective plate plane.

54. A method according to one of claims 50-53, characterized in that distinct engagement locations (626a, 626f, 626c, 666, 664) are arranged at least partly on different part levers (626I, 626II, 626III).

55. A method according to one of claims 50-54, characterized in that said part levers (626I, 626II, 626III) are fixed to each other, for instance by welding, gluing, or riveting.

56. A method according to one of claims 50-55, characterized in that said part levers (626I, 626II, 626III) are provided with support openings (670) serving for connection with an actuating shaft (625) of corresponding cross section.

57. A method according to claim 56, characterized in that said part levers (626I, 626II, 626III) are provided with polygonal support openings (670).

## Revendications

1. Attelage de remorque comprenant un corps d'attelage (10) et une tige d'attelage (19), mobile par rapport à ce corps d'attelage (10), entre une position attelée (figure 1) et une position dételée (figure 4), un guidage de tige (17), placé sur le corps d'attelage (10), pour la tige d'attelage (19), un mécanisme de réglage (21), placé sur le corps d'attelage (10), pour le réglage de la tige d'attelage (19) entre la position attelée (figure 1) et la position dételée (figure 4), des moyens de sûreté (28) pour le blocage de la tige d'attelage (19) dans la position attelée (figure 1) et un boîtier (22), fixé sur le corps d'attelage, qui renferme, au moins en partie, le mécanisme de réglage (21) et les moyens de sûreté (28),
caractérisé
en ce que le guidage de tige (17) est placé sur un élément de guidage (17), séparé du boîtier (22) et en ce que les moyens de sûreté (28) opèrent au moins en partie entre l'élément de guidage (17) et la tige d'attelage (19).

2. Attelage de remorque selon la revendication 1,
caractérisé
en ce que les moyens de sûreté comprennent au moins un élément de sûreté (29), qui est guidé sur l'élément de guidage (17), entre une position de blocage et une position de dégagement.

3. Attelage de remorque selon la revendication 2,
caractérisé
en ce que l'élément de sûreté (29) est formé par une cheville de sûreté (29), qui est guidée coulissante sur l'élément de guidage (17), selon une direction transversale à la direction de guidage (Kₓ) de la tige d'attelage (19).

4. Attelage de remorque selon l'une des revendications 2 et 3,
caractérisé
en ce qu'au moins un élément de sûreté (29) peut être fait passer, par une partie (26) du mécanisme d'actionnement (21), à l'encontre de la force d'un dispositif de précontrainte d'élément de sûreté (27), de la position de sûreté dans la position de dégagement, et ce avant ou pendant une phase initiale du déplacement de la tige d'attelage (19), de sa position attelée (figure 1) dans sa position dételée (figure 4).

5. Attelage de remorque selon la revendication 4,
caractérisé
en ce que l'élément de sûreté peut être fait passer par un levier de relèvement (26) du mécanisme d'actionnement (21), de la position de sûreté dans la position de dégagement, lequel levier de relèvement (26) est disposé et conçu pour l'entraînement de la tige d'attelage (19), de la position attelée (figure 1) dans la position dételée (figure 4).

6. Attelage de remorque selon la revendication 5,
caractérisé
en ce que le levier de relèvement (26) s'engage dans un évidement (19a) de la tige d'attelage, sur lequel passe au moins en partie un élément d'entraînement (34), pouvant être sollicité par le levier de relèvement (26), en ce que l'élément de sûreté (29) s'engage dans cet évidement (19a) et en ce que sur l'élément de sûreté (29) et le levier de relèvement (26) sont prévus des moyens à came (32, 33) coopérants, qui entrent en interaction, lors du passage du levier de relèvement (26) d'une position de repos, correspondant à la position attelée (figure 1) de la tige d'attelage (19), dans une position d'amorce d'entraînement, correspondant à l'action du levier de relèvement (26) sur l'élément d'entraînement (34), et font passer l'élément de sûreté (29), au moins en partie, de la position de sûreté dans la position de dégagement.

7. Attelage de remorque selon l'une des revendications 5 et 6,
caractérisé
en ce que le levier de relèvement (26) opère dans sa position de repos en tant qu'élément de sûreté supplémentaire (en 26a) pour le blocage de la tige d'attelage (19) dans sa position attelée (figure 1).

8. Attelage de remorque selon la revendication 7,
caractérisé
en ce que le levier de relèvement (26) coopère dans sa position de repos, par autoblocage (26a - 19a1) ou par concordance de forme (26a - 19a2) avec la tige d'attelage (19).

9. Attelage de remorque selon la revendication 7 ou 8,
caractérisé
en ce que le levier de relèvement (26) est monté sur le boîtier d'attelage (22).

10. Attelage de remorque selon l'une des revendications 7 à 9,
caractérisé
en ce que le levier de relèvement (26) perd sa fonction de sûreté, lors du passage de sa position de repos en direction de sa position d'amorce d'entraînement, avant que l'élément de sûreté (29) ne quitte sa position de sûreté.

11. Attelage de remorque selon l'une des revendications 1 à 10,
caractérisé
en ce que l'élément de guidage (17) est conformé en douille de guidage (17) dans laquelle est guidée la tige d'attelage (19).

12. Attelage de remorque selon la revendication 11,
caractérisé
en ce que la douille de guidage présente une fente et en ce qu'un levier de relèvement (26) du mécanisme d'actionnement (21) coopère à travers cette fente avec la tige d'attelage (19).

13. Attelage de remorque selon l'une des revendications 1 à 12,
caractérisé
en ce que les moyens de sûreté (28) sont montés au moins partiellement dans une partie de pied (17a) de l'élément de guidage (17), qui sert à la fixation de l'élément de guidage (17) sur le corps d'attelage (10).

14. Attelage de remorque selon la revendication 13,
caractérisé
en ce que dans le cas d'une réalisation en forme de fourche du corps d'attelage (10) avec une partie de fourche supérieure (16) et une partie de fourche inférieure (15), la partie de pied (17a) de l'élément de guidage (17) est fixée sur la face supérieure de la partie de fourche supérieure (16).

15. Attelage de remorque selon l'une des revendications 1 à 12,
caractérisé
en ce que dans le cas d'une réalisation en forme de fourche du corps d'attelage (110) avec une partie de fourche supérieure (116) et une partie de fourche inférieure (115), l'élément de guidage (117) est réalisé avec un élément d'appui (117d) formé d'un seul tenant, qui dans la position de fonctionnement de l'élément de guidage (17) prend appui contre la face inférieure de la partie de fourche supérieure (116).

16. Attelage de remorque selon la revendication 15,
caractérisé
en ce que l'élément de guidage (117) est réalisé sous la forme d'une douille de guidage avec un élément d'appui (117d) en forme d'anneau.

17. Attelage de remorque selon la revendication 15 ou 16,
caractérisé
en ce que dans sa position de fonctionnement, l'élément de guidage est bloqué contre un mouvement de descente, contre la partie de fourche supérieure (116), par des moyens de maintien (117e).

18. Attelage de remorque selon l'une des revendications 2 à 17,
caractérisé
en ce que les moyens de sûreté (228) comprennent deux éléments de sûreté (229, 229'), qui sont guidés sur l'élément de guidage (217).

19. Attelage de remorque selon la revendication 18,
caractérisé
en ce que les deux éléments de sûreté se font face l'un l'autre selon une direction qui est sensiblement orthogonale à un plan médian longitudinal du corps d'attelage (219), défini par l'axe longitudinal (Aₓ) du corps d'attelage et par la direction de guidage (Kₓ) de la tige d'attelage.

20. Attelage de remorque selon l'une des revendications 18 et 19,
caractérisé
en ce que les deux éléments de sûreté (229, 229') sont formés chacun par une tige de sûreté (229, 229'), qui est guidée coulissante sur l'élément de guidage (217).

21. Attelage de remorque selon l'une des revendications 18 à 20,
caractérisé
en ce que les deux éléments de sûreté (229, 229') peuvent être fait passer, par des moyens à came (232, 232'), de la position de sûreté respective dans une position de dégagement, qui sont placés d'une part sur un levier de relèvement (226) et d'autre part sur les deux éléments de sûreté (229, 229').

22. Attelage de remorque selon l'une des revendications 18 à 21,
caractérisé
en ce qu'un levier de relèvement (226) opérant le passage de la tige d'attelage (219) de sa position attelée dans sa position dételée, est monté sur le boîtier (222) et est libéré d'une fonction de sûreté, reposant sur une coopération directe avec la tige d'attelage (219).

23. Attelage de remorque selon l'une des revendications 1 à 22,
caractérisé
en ce que les moyens de sûreté comprennent au moins un élément de sûreté (228), qui est relié en vue d'un déplacement commun, avec un élément d'indication (229'a), visible sur le côté extérieur de l'attelage de remorque.

24. Attelage de remorque selon la revendication 23,
caractérisé
en ce que l'élément d'indication (229'a) est formé par l'extrémité d'une tige de sûreté (229'), qui est guidée dans l'élément de guidage (217).

25. Attelage de remorque selon l'une des revendications 1 à 24,
caractérisé
en ce que les éléments de sûreté (328) comprennent au moins un élément de sûreté (345) côté tige d'attelage, qui est monté mobile sur la tige d'attelage (319) et qui coopère avec une contrebutée (354) sur l'élément de guidage (317).

26. Attelage de remorque selon la revendication 25,
caractérisé
en ce que dans le cas où l'élément de guidage (317) est conformé en douille de guidage et en cas de guidage de la tige d'attelage (319) dans un canal de guidage de cette douille de guidage (317), l'élément de sûreté (345) côté tige d'attelage est précontraint, à l'encontre de l'action de moyens de précontrainte, par une partie du mécanisme d'actionnement (321), dans une position de dégagement à l'intérieur du contour de la tige d'attelage (319) et peut être fait passer par les moyens de précontrainte dans une position de sûreté, dans laquelle il coopère avec la contrebutée (354) de la douille de guidage (317), la position de sûreté se produisant lorsque la tige d'attelage (319) s'approche de sa position attelée et le mécanisme d'actionnement (321) s'approche d'une position de repos, correspondant à la position attelée de la tige d'attelage (319).

27. Attelage de remorque selon l'une des revendications 25 et 26,
caractérisé
en ce que l'élément de sûreté (345) côté tige d'attelage est formé par une tige de sûreté (345) guidée coulissante à l'intérieur de la tige d'attelage (319).

28. Attelage de remorque selon la revendication 27,
caractérisé
en ce que la cheville de sûreté (345) est guidée sensiblement radialement à un axe (Kₓ) de la tige d'attelage (319), dans la tige d'attelage (319).

29. Attelage de remorque selon l'une des revendications 26 à 28,
caractérisé
en ce que la contrebutée (354) est formée par un passage (354) à travers la douille de guidage (317).

30. Attelage de remorque selon l'une des revendications 25 à 29,
caractérisé
en ce que l'élément de sûreté (354) côté tige d'attelage peut être commandé par un levier de relèvement (326), qui sert au passage de la tige d'attelage (319) de sa position attelée (figure 1) dans sa position dételée (figure 4).

31. Attelage de remorque selon l'une des revendications 1 à 30,
caractérisé
en ce que l'élément de guidage (17) est sensiblement enfermé à l'intérieur du boîtier (22).

32. Attelage de remorque selon l'une des revendications 1 à 31,
caractérisé
en ce que le boîtier (22) et l'élément de guidage (17) sont fixés sur le corps d'attelage (10), par des moyens de fixation (18 ou 23) séparés.

33. Attelage de remorque selon l'une des revendications 1 à 32,
caractérisé
en ce qu'au moins un élément de sûreté (626a) est relié, en vue d'un déplacement commun, avec un élément d'indication (666, 667), qui est guidé par le boîtier (622), vers un point d'observation.

34. Attelage de remorque selon l'une des revendications 2 à 33,
caractérisé
en ce qu'un élément de sûreté (19), monté mobile sur un élément de guidage (17), est précontraint dans une position de sûreté, par des moyens de précontrainte (30), qui prennent appui contre le boîtier (22) et sont éventuellement logés à l'intérieur de ce boîtier (22), des sollicitations de l'élément de sûreté (29), provenant de la tige d'attelage (19), étant sensiblement désaccouplées du boîtier (22).

35. Attelage de remorque selon l'une des revendications 1 à 34, comportant en outre une mâchoire d'attelage (39), pouvant pivoter autour d'un axe de pivotement parallèle ou coïncidant avec un axe de guidage (Kₓ) de la tige d'attelage (19), avec des moyens de blocage (41) en vue du blocage de la mâchoire d'attelage (39) contre une rotation autour de l'axe de pivotement, ces moyens de blocage (41) bloquant la mâchoire d'attelage (39) dans une position centrale, lorsque la tige d'attelage se trouve en position dételée (figure 4) et la libèrent, lorsque la tige d'attelage (19) se trouve en position attelée (figure 1), et ces moyens de blocage étant déplaçables, par le mécanisme d'actionnement (21), entre une position de blocage (figure 4), dans laquelle ils bloquent la mâchoire d'attelage (39), et une position de libération (figure 1), dans laquelle ils libèrent la mâchoire d'attelage (39) (figure 1),
caractérisé
en ce que les moyens de blocage (41) sont placés entre le corps d'attelage (10) et la mâchoire d'attelage (39) de manière qu'aucune force sensible, provenant de l'action d'une barre d'attelage sur la mâchoire d'attelage (39), ne soit transmise aux moyens d'actionnement (21).

36. Attelage de remorque selon la revendication 35,
caractérisé
en ce que les moyens de blocage (41) comprennent un organe de blocage (41a), guidé dans le corps d'attelage (10), qui vient en engagement de blocage avec un logement d'organe de blocage (41c) de la mâchoire d'attelage (39).

37. Attelage de remorque selon l'une des revendications 1 à 36, comportant en outre une mâchoire d'attelage (39), pouvant pivoter autour d'un axe de pivotement parallèle ou coïncidant avec un axe de guidage (Kₓ) de la tige d'attelage (19), avec des moyens de blocage (41) en vue du blocage de la mâchoire d'attelage (39) contre une rotation autour de l'axe de pivotement, ces moyens de blocage (41) bloquant la mâchoire d'attelage (39) dans une position centrale, lorsque la tige d'attelage se trouve en position dételée (figure 4) et la libèrent, lorsque la tige d'attelage (19) se trouve en position attelée (figure 1), et ces moyens de blocage étant déplaçables, par le mécanisme d'actionnement (21), entre une position de blocage (figure 4), dans laquelle ils bloquent la mâchoire d'attelage (39), et une position de libération (figure 1), dans laquelle ils libèrent la mâchoire d'attelage (39) (figure 1),
caractérisé
en ce que les moyens de blocage (41) comprennent un organe de blocage (41a), guidé dans un guidage d'organe de blocage (41b) solidaire du corps d'attelage et un cliquet de blocage (41c) sur la mâchoire d'attelage (39), en ce qu'entre une partie (26) du mécanisme d'actionnement (21) et l'organe de blocage (41a) existe une liaison came-suiveur de came (41d, 41e), pour déplacer l'organe de blocage (41a) entre une position de libération (figure 1) et une position de blocage (figure 4) par rapport au cran de blocage (41c), en fonction de la position de la tige d'attelage (19), et en ce que la liaison came-suiveur de came (41d, 41e) est conçue de manière qu'en cas de non-alignement entre l'organe de blocage (41a) et le cran de blocage (41c), il se produit une déformation élastique (en 41f) dans la liaison came-suiveur de came (41d, 41e), lorsque l'organe de blocage s'approche de sa position de blocage.

38. Attelage de remorque selon la revendication 37,
caractérisé
en ce que la liaison came-suiveur de came (41d, 41e) comprend un suiveur de came (41e), qui prend appui élastiquement (en 41f) contre l'organe de blocage (41a).

39. Attelage de remorque selon la revendication 38,
caractérisé
en ce que le suiveur de came (41e) est soutenu par un ressort de compression hélicoïdal (41f), qui est logé dans un perçage (41g) de l'organe de blocage (41a).

40. Attelage de remorque selon l'une des revendications 37 à 39,
caractérisé
en ce que la liaison came-suiveur de came (41d, 41e) comprend un double système à came (41d, 41i) sur la partie (26) respective du système d'actionnement (21), une première came (41d) du double système à came (41d, 41e) coopérant avec un premier suiveur de came (41e) soutenu élastiquement sur l'organe de blocage (41a) et une deuxième came (41i) du double système à came (41d, 41i) coopère avec un deuxième suiveur de came (41j), placé rigidement sur l'organe de blocage (41a) et ce deuxième suiveur de came (41j) pouvant se soulever de la deuxième came (41i), lorsque l'organe de blocage (41a), par suite d'un non-alignement avec le cran de blocage (41c), ne peut passer dans sa position de blocage, mais le double système à came (41d, 41i) exécute cependant un déplacement relatif par rapport à l'organe de blocage (41a), par suite d'un déplacement du mécanisme d'actionnement (21).

41. Attelage de remorque selon l'une des revendications 1 à 40, dans lequel le mécanisme de réglage (621) comprend un levier de relèvement (626) coopérant avec un élément d'entraînement (634) de la tige d'attelage (619) et le cas échéant avec les moyens de sûreté (629),
caractérisé
en ce que ce levier de relèvement (626) est constitué d'une pluralité d'au moins deux leviers partiels (626I, 626II, 626III).

42. Attelage de remorque selon la revendication 41,
caractérisé
en ce que différents éléments fonctionnels (626a, 626f, 626b, 666, 664) du levier de relèvement sont placés sur différents leviers partiels.

43. Attelage de remorque selon la revendication 41 ou 42,
caractérisé
en ce que les leviers partiels (626I, 626II, 626III) sont découpés dans un matériau plat.

44. Attelage de remorque selon la revendication 41 ou 42,
caractérisé
en ce que les leviers partiels (626I, 626II, 626III) sont des éléments frittés.

45. Attelage de remorque selon l'une des revendications 41 à 44,
caractérisé
en ce que les leviers partiels (626I, 626II, 626III) sont fixés les uns sur les autres, par exemple par soudage ou collage.

46. Attelage de remorque selon l'une des revendications 41 à 45,
caractérisé
en ce que les leviers partiels (626I, 626II, 626III) sont pourvus d'ouvertures polygonales (670), qui sont montées de manière à ne pouvoir tourner sur un arbre d'actionnement (625) avec profil polygonal.

47. Attelage de remorque selon l'une des revendications 1 à 46,
caractérisé
en ce que face à l'extrémité supérieure de la tige d'attelage (19) est prévu un ressort (35), qui maintient la tige d'attelage (19) en position d'accrochage par rapport à un levier de relèvement (26) du mécanisme d'actionnement (21), la tige d'attelage (19) prenant ensuite une position correspondant à la position dételée (figure 4) fonctionnelle, par rapport au guidage de tige (17).

48. Attelage de remorque selon l'une des revendications 1 à 47,
caractérisé
en ce que le boîtier (22) est réalisé dans une construction légère, en particulier en métal léger ou en matière synthétique.

49. Attelage de remorque selon l'une des revendications 1 à 48,
caractérisé
en ce que la tige d'attelage (19) en position dételée pénètre dans la voie d'introduction d'un oeillet de traction (20) et peut être détachée, par relèvement au moyen de l'oeillet de traction (20), par des moyens de maintien (19a2, 34), la bloquant dans la position dételée (figure 4) à l'encontre d'une précontrainte élastique.

50. Procédé de fabrication d'un levier de relèvement (626) pour un attelage de remorque selon l'une des revendications 41 à 49,
ce levier de relèvement (626) comportant une pluralité de points d'engagement (626a, 626f, 626c, 666, 664) en vue de la coopération avec des éléments fonctionnels de l'attelage de remorque,
caractérisé
en ce que le levier de relèvement (626) est constitué, dans une construction sandwich, d'une pluralité de leviers partiels (626I, 626II, 626III) en forme de platines.

51. Procédé selon la revendication 50,
caractérisé
en ce que les leviers partiels (626I, 626II, 626III) sont découpés dans une tôle, en particulier par estampage et/ou découpe laser et/ou découpe au rayon électronique et/ou découpe au jet d'eau.

52. Procédé selon la revendication 50 ou 51,
caractérisé
en ce que les leviers partiels (626I, 626II, 626III) sont traités thermiquement, en particulier trempés, au moins aux points d'engagement (626a, 626f, 626c, 666, 624) par dégagement de chaleur pendant l'opération de coupe.

53. Procédé selon l'une des revendications 50 à 52,
caractérisé
en ce que les leviers partiels (626I, 626II, 626III) sont découpés avec des bords qui sont sensiblement perpendiculaires au plan respectif des platines.

54. Procédé selon l'une des revendications 50 à 53,
caractérisé
en ce que différents points d'engagement (626a, 626f, 626c, 666, 664) sont formés au moins en partie sur différents leviers partiels (626I, 626II, 626III).

55. Procédé selon l'une des revendications 50 à 54,
caractérisé
en ce que les leviers partiels (626I, 626II, 626III) sont fixés les uns sur les autres, par exemple par soudage, collage ou rivetage.

56. Procédé selon l'une des revendications 50 à 55,
caractérisé
en ce que les leviers partiels (626I, 626II, 626III) sont pourvus d'ouvertures d'appui (670), qui servent à la liaison avec un arbre d'actionnement (626) de section transversale correspondante.

57. Procédé selon la revendication 56,
caractérisé
en ce que les leviers partiels (626I, 626II, 626III) sont pourvus d'ouvertures d'appui (670) polygonales.
